Europäisches Patentamt

European Patent Office

Office européen des brevets

(11) Veröffentlichungsnummer: **0 270 893 B1**

(12) **EUROPÄISCHE PATENTSCHRIFT**

(45) Veröffentlichungstag der Patentschrift: **10.06.92**

(51) Int. Cl.⁵: **B60G 17/00**

(21) Anmeldenummer: **87117128.6**

(22) Anmeldetag: **20.11.87**

(54) **Vorrichtung zur aktiven Fahrwerksregelung bei Kraftfahrzeugen.**

(30) Priorität: **09.12.86 DE 3641950**
**11.11.87 DE 3738284**

(43) Veröffentlichungstag der Anmeldung:
**15.06.88 Patentblatt 88/24**

(45) Bekanntmachung des Hinweises auf die
Patenterteilung:
**10.06.92 Patentblatt 92/24**

(84) Benannte Vertragsstaaten:
**DE FR GB SE**

(56) Entgegenhaltungen:
EP-A- 0 027 869          EP-A- 0 114 757
EP-A- 0 162 448          EP-A- 0 190 944
EP-A- 0 197 316          EP-A- 0 197 317
DE-C- 3 518 503          US-A- 3 124 368
US-A- 3 701 499

ASME PUBLICATION, DSC-Band 1, 1985, Seiten 341-346; D. KARNOPP: "Two contrasting
versions of the optimal active vehicle suspension"

SAE THE ENGINEERING RESOURCE FOR AD-
VANCING MOBILITY, SAE TECHNICAL PAPER
SERIES NR. 830442, 1983, Seiten 1-18, Society of Automotive Engineers, Inc., Warrendale, P.A., US; B. MACLAURIN: "Progress in
British tracked vehicle suspension systems"

VEHICLE SYSTEM DYNAMICS, Band 12, 1983,
Seiten 291-316, Swets & Zeitlinger, Lisse, NL;
D. KARNOPP: "Active damping in road vehicle suspension systems"

(73) Patentinhaber: **ROBERT BOSCH GMBH**
**Postfach 30 02 20**
**W-7000 Stuttgart 30(DE)**

(72) Erfinder: **Karnopp, Dean, Prof. Ing.**
**1217 Stanford Place**
**Davis, CA 95616(US)**

**Beschreibung**

Stand der Technik

Die Erfindung geht aus von einer Vorrichtung nach dem Oberbegriff des Anspruchs 1 und betrifft die aktive Fahrwerksregelung bei Kraftfahrzeugen, wobei auf der Basis bekannter Niveauregulierungen aufbauend Konzepte erarbeitet und vorgelegt werden, die von den Niveauregulierungen ausgehend schließlich spezielle Aspekte der Erfindung im einzelnen darlegen.

So ist es bekannt, daß übliche niveauregulierende Fahrwerkssysteme rein von statischen Belastungen bewirkte Lageänderungen des Fahrzeugaufbaus gegenüber der Fahrbahn korrigieren und hierfür eine äußerst geringe Energiezufuhr benötigen. Andererseits müssen voll aktive Fahrwerkssysteme mit einem schnellen Servomechanismus zwischen Rädern und Aufbau im Frequenzbereich der Radeigenbewegung reagieren können und haben deshalb einen äußerst hohen Energiebedarf, um den Aufbau, also den Fahrzeugkörper, von den Radstörungen zu isolieren.

Eine weitere Klasse aktiver Systeme, die aktiv nur auf niederfrequente Anregungen (Aufbaueigenfrequenz) reagieren, nicht aber auf hochfrequente Einflüsse, und deshalb relativ geringen Energiebedarf hat, könnte mit dem Begriff "schnelles, Belastungswechsel kompensierendes System" (fast load leveling system - FLLS) beschrieben werden, wobei unter dem Begriff Belastungswechsel eine, auf den Fahrzeugaufbau wirkende Ersatzkraft (Fliehkraft) aufgrund von Fahrmanövern (Kurvenfahrt, Bremsen) oder Zuladung, verstanden wird.

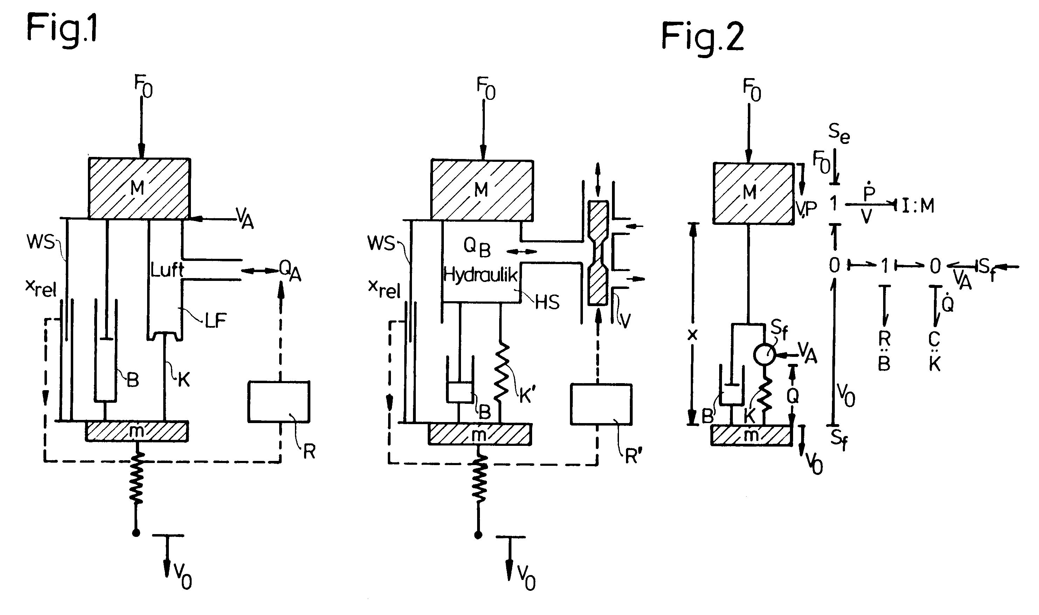

Um ein Federungssystem bei Kraftfahrzeugen zu bilden, müßte ein derartiges System zusätzlich passive Feder-und Dämpferelemente beinhalten, wobei erstere im aktiven Stellelement integriert (Luftfederung, s. Fig. 1) oder aber in konventioneller Weise parallel zum Dämpfer angeordnet sein können (hydraulisches Stellglied, s. Fig. 2) und das Dämpferelement von passiver, aktiver oder semi-aktiver Bauart sein könnte. Die in Fig. 1 und 2 dargestellten Varianten der topologischen Anordnung von Fahrwerkelementen (Stellglied, Feder, Dämpfer) haben zwar graduell, jedoch keine prinzipiell unterschiedlichen Auswirkungen auf das Systemverhalten.

Genauere Erläuterungen zu dem Sachverhalt allgemein und zu den bekannten Systemen können folgenden Veröffentlichungen entnommen werden:Karnopp, D., "Active Damping in Road Vehicle Suspension Systems", Vehicle System Dynamics, Bd. 12, Nr. 6, S. 291-311, sowie MacLaurin, Bruce, "Progress in British Tracked Vehicle Suspension Systems", SAE Paper 830442, 1983, Karnopp, D., "Two Contrasting Versions of the Optimal Active Vehicle Suspension", Dynamic Systems: Modeling and Control, ASME Publication DSC-Vol. 1, 1985, S. 341-346, und schließlich den veröffentlichten europäischen Patentanmeldungen EP-A-0197316 und EP-A-0 197 317 In diesen sind semi-aktive Dämpfungssysteme zur Dämpfung von Bewegungsabläufen zweier Körper, insbesondere in einem Aufhängungssystem Fahrzeugrad/Fahrzeug im einzelnen erläutert.

Betrachtet man ein solches FLLS-Niveauregulierungssystem entsprechend den Figuren 1 oder 2, in Kombination mit passiven Dämpfungselementen, dann ergeben sich die folgenden grundsätzlichen Erkenntnisse, aber auch die sich hierbei auftuende Problematik:

- Bei Einbeziehung der aktiven Stellkomponenten innerhalb einer Regelung des Einfederwegs erkennt man bei hohen Verstärkungswerten instabiles Verhalten des Aufbaus, wenn man versucht, statische Auslenkungen schnell zu kompensieren. Kleine Verstärkungsfaktoren (langsame Niveauregulierung) können schnelle Belastungswechsel nicht kompensieren.
- In beiden Grundsystemen bewirkt das FLLS eine Reduktion der Dämpfungseigenschaft des passiven Dämpfers und führt daher bei zu niedriger Grunddämpfung dieses passiven Elements zu instabilem Systemverhalten. Diese Tatsache würde entweder hohe passive Dämpfung (schlechter Komfort), eine Fehlererkennung bei zunehmendem, instabilem Verhalten oder aber eine Anpassung der Verstärkung bei Verschlechterung der Systemdämpfung erfordern.
- Ein positiver Aspekt eines aktiven Fahrwerks mit FLLS ist die "Fail-Safe"-Eigenschaft, da auch bei abgeschaltetem FLLS die Funktion des Fahrwerks durch die vorhandenen passiven Komponenten sichergestellt ist.
- Ein aktives Fahrwerk mit FLLS soll speziell niederfrequente Aufbaubewegungen aufgrund der eingangs beschriebenen Belastungswechsel kontrollieren. Deshalb erscheint es sinnvoll, hochfrequente Bewegungen (Radeigendynamik) in der Regelung nicht zu berücksichtigen, was durch Tiefpaß-Filterung der Einfederwege realisiert werden könnte; wobei Einflüsse dieser Filterung auf das Gesamtsystemverhalten berücksichtigt werden müßten.
- Möglichkeiten der Reduktion des Energiebedarfs derartiger Systeme sind die beschriebene Filterung entsprechender Signale und daraus resultierende langsame Verstellanforderungen; definierte Anpassung der Verstärkung je nach Fahrbetrieb (hoch bei Bremsmanövern etc., ansonsten niedrig) oder ein abschaltbares FLLS, welches nur bei Bedarf aktiviert wird.

Diese Gesichtspunkte, auf die später im Verlauf der Beschreibung zum besseren Verständnis auch anhand mathematischer Betrachtungen noch genauer eingegangen wird, bilden die Grundlage für vorliegende Erfindung, die daher davon ausgeht, daß ein FLLS mit passiven Feder-/Dämpferkomponenten in der Lage ist, niederfrequente Aufbaubewegungen zu kompensieren, während hochfrequente Störeinflüsse von konventionellen passiven Komponenten kontrolliert werden könnten. Dies führt allerdings zu einem Kompromiß in der Dämpfercharakteristik, der erforderlich ist, um Instabilitäten des Systems zu vermeiden. Es wäre daher eine hohe passive Dämpfung zwingend erforderlich, was andererseits Einbußen an Fahrkomfort bedeutet.

Der vorliegenden Erfindung liegt daher die Aufgabe zugrunde, unter Einbeziehung eines FLLS-Systems ein aktives Federungssystem bei Kraftfahrzeugen zu schaffen, welches mit geringen zusätzlichen Elementen und in entsprechender Ausgestaltung des Reglers in der Lage ist, sowohl hochfrequente Bewegungen der Radeigendynamik als auch niederfrequente Aufbaubewegungen des Fahrzeugs wirkungsvoll zu beherrschen und eine entscheidende fahrdynamische Verbesserung eines bis zu einem gewissen Grade aktiven Federungssystems gerade gegenüber konventionellen Systemen zu erzielen.

Vorteile der Erfindung

Die Erfindung löst diese Aufgabe mit den kennzeichnenden Merkmalen des Anspruchs 1 und hat den Vorteil, daß ein wirkungsvolles aktives Federungssystem auf der Basis einer schnellen Niveauregulierung (FLLS) möglich ist. Der Erfindung gelingt dabei ein Kompromiß in der Dämpfercharakteristik, der darin besteht, daß aktive bzw. sogenannte semi-aktive Dämpfer verwendet werden, wobei dann eine Kombination aus variablen Dämpfern, variablen Federsteifigkeiten und einem intelligenten FLLS-Konzept zu deutlichen fahrdynamischen Verbesserungen gegenüber konventionellen Federungssystemen führt.

Ein aktives, auf einem FLLS basierendes Fahrwerk mit einfacher Lagerückführung ist aufgrund der erforderlichen hoher Dämpfung im offenen Kreis (ungeregelte, passive Dämpfung) auf kleine Verstärkungsfaktoren (langsame Reaktionen) beschränkt, wobei gleichzeitig Nachteile bei der Isolation der Aufbaumasse gegenüber hochfrequenten Störeinflüssen in Kauf genommen werden müssen. Mittels aktiver Dämpferkräfte, wie beschrieben, ist es möglich, das System, ohne dabei die Isolation des Aufbaus zu beeinflussen, zu stabilisieren; d.h. die passive Dämpfung (Rad-Aufbau) könnte reduziert werden. Betrachtet man nur den Aufbau, so könnte theoretisch die passive Dämpfung vollkommen vernachlässigt werden; allerdings zeigt sich in der Realität, daß ein bestimmtes Maß an passiver Dämpfung erhalten bleiben muß (Raddämpfung).

Eine Kombination von aktiver und passiver Dämpfung, die nur begrenzt in der Lage sein muß, Energie zuzuführen (was erwiesenermaßen selten der Fall sein muß, d.h. ein semiaktiver Dämpfer, erbringt dabei nahezu den Vorteil eines aktiven Dämpfers.

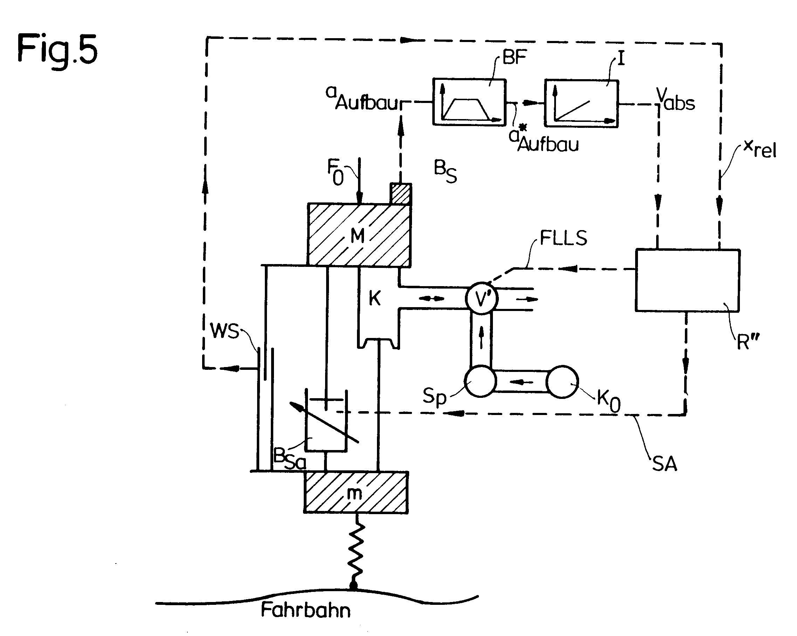

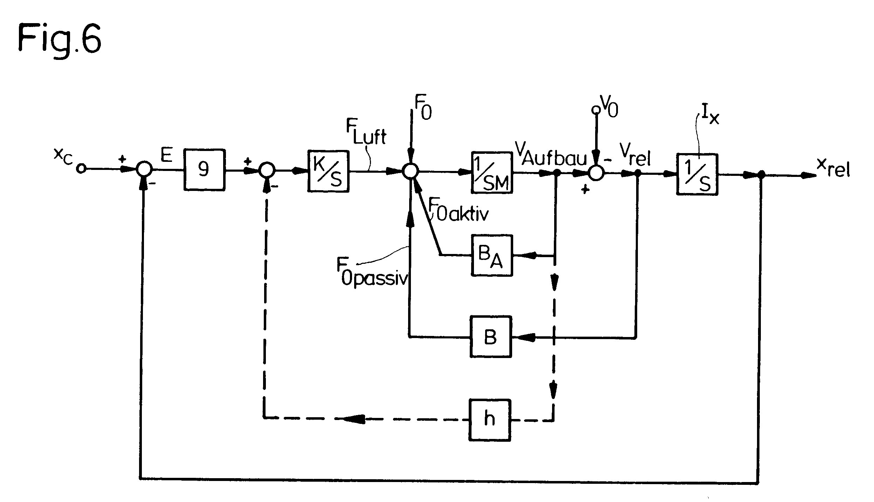

Die Erfindung betrachtet Systeme und wird im folgenden diese im einzelnen noch erläutern, bei denen ein stabiles Systemverhalten mittels passiver bzw. aktiver Dämpfung gewährleistet wird. In beiden Fällen (passive oder aktive Dämpfung) werden vereinfachte Systeme 3. Ordnung betrachtet. Im ersten Falle mit passiver Dämpfung wird ein Regelsignal (Einfederung) und ein Stellelement (FLLS) verwendet. Allerdings bedeutet eine derartige Kombination nur ein bedingt regelbares System, welches zu Instabilitäten neigt. Der zweite Fall mit aktiver Dämpfung beinhaltet dann zwei Stellglieder und zwei Regelsignale, wobei der Einfederweg als Regelgröße für das FLLS, die absolute Vertikalgeschwindigkeit des Aufbaus als Regelgröße für den aktiven Dämpfer verwendet wird. Aus regelungstechnischer Sicht stellt dieses System einen akzeptablen Kompromiß für ein Gesamtsystemverhalten dar, ist aber noch verbesserungsfähig, wenn man berücksichtigt, daß die vereinfachte Annahme eines Systems 3. Ordnung für reale Systeme nicht zutrifft und mit zunehmender Ordnung sich zusätzliche Verschlechterungen der Regelbarkeit ergeben. Daher umfaßt die Erfindung in weiterer Ausgestaltung den zweiten Fall aktiver Dämpfung, ergänzt durch ein weiteres Rückführsignal, in dem das bereits für den aktiven bzw. semiaktiven, eingesetzten Dämpfer benötigte und daher vorhandene Absolutgeschwindigkeitssignal zusätzlich für die schnelle Niveauregulierung (FLLS) verwendet wird. In diesem Fall ist das System dann voll regelbar, und das Systemverhalten kann beliebig beeinflußt werden, was anhand der Figuren 5 und 6 später noch erläutert wird. Auch bei Betrachtung eines entsprechenden Systems höherer Ordnung (reales System) ist ein sehr guter Kompromiß für die Gesamtabstimmung möglich. Die Entkopplung Rad-Aufbaubewegung ist durch die erfindungsgemäßen Merkmale gewährleistet.

Bei einer solchen Form eines aktiven Fahrwerks ist hinsichtlich einer optimalen Abstimmung noch ein vorgegebenes Maß an passiver Dämpfung erforderlich, welches für die Kontrolle der Radbewegung eingesetzt wird. Daneben kann eine nahezu ideale Abstimmung des aktiven Fahrwerks erzielt werden, wobei sich die folgenden Hauptvorteile eines derartigen systems ergeben:

- Minimale Anzahl von Regelsignalen bei voller Regelbarkeit des Systems (Absolutgeschwindigkeit des Aufbaus doppelt verwendet).
- Einfacher Proportionalregler, bei dem jedoch das integrale Verhalten gegenüber Störungen der Effektivkraft auf den Aufbau erhalten bleibt, d.h. eine statische Regelabweichung ausgeschlossen wird und damit die Funktionsfähigkeit der konventionellen Niveauregulierung voll erhalten bleibt.
- Die Eigenwerte des Systems können beliebig vorgegeben werden (voll regelbares System), wodurch das dynamische Systemverhalten beliebig kontrolliert werden kann. Fliehkräfte können beliebig schnell ausgeregelt werden.
- Die zusätzliche Rückführung des Geschwindigkeitssignales hat keinen negativen Einfluß auf die Isolation der Aufbaubewegung gegenüber Fahrbahnstörungen.
- Bei Abschalten bzw. Defekt der aktiven Stellglieder bleibt das Fahrzeug betriebsbereit; hieraus ergibt sich die Möglichkeit, bei entsprechenden Fahrbedingungen und einer entsprechenden Grundabstimmugn die Aktivkomponenten abzuschalten und dadurch Energieeinsparungen zu erzielen.
- Darüber hinaus wird die "Fail-Safe"-Funktion des Systems in jedem Fall gewährleistet.

Zusammengefaßt betrifft die Erfindung somit ein aktives Fahrwerkskonzept, basierend auf dem beschriebenen Einsatz des FLLS und aktiver bzw. semiaktiver Dämpfung und Regelung des Einfederwegs sowie der absoluten, vertikalen Aufbaugeschwindigkeit.

Durch die in den Unteransprüchen bzw. durch die im Detail in der nachfolgenden Beschreibung aufgeführten Maßnahmen sind vorteilhafte Weiterbildungen und Verbesserungen der Erfindung möglich.

In der nachfolgenden Beschreibung werden die folgenden drei Gesichtspunkte im einzelnen erläutert und nach Aufbau, Grundkonzeption und Funktionen erläutert:

1. Niveauregulierung mit Rückführung des relativen Einfederweg, Analyse und Erkenntnisse;
2. Niveauregulierung mit Rückführung des relativen Einfederweg und zusätzlicher aktiver Dämpfung mit Rückführung $V_{Aufbau}$, Analyse und Erkenntnisse und Vergleich mit 1.);
3. schnelle Niveauregulierung (FLLS) mit aktiver Dämpfung und Rückführung von $V_{Aufbau}$ auf beide Komponenten und zusätzliche Rückführung des relativen Einfederwegs auf die Niveauregulierungskomponente - Analyse, Erkenntnisse und Vergleich mit 1.) und 2.).

Zeichnung

Ausführungsbeispiele der Erfindung sind in der Zeichnung dargestellt und werden in der nachfolgenden Beschreibung näher erläutert. Es zeigen:

Fig. 1        schematisiert eine Ausführungsform einer konventionellen Radaufhängung mit Niveauregulierung, bestehend aus Luftfeder und passivem Dämpfer;

Fig. 2        zunächst eine der Darstellung der Fig. 1 entsprechende konventionelle Radaufhängung, bei der eine hydraulische Lagekompensation vorgesehen ist und daran angrenzend eine beiden Fig. 1 und 2 entsprechende Schemadarstellung mit zugehörigem Bondgraph;

Fig. 3        zeigt eine erste Ausführungsform eines aktiven Fahrwerksystems unter Verwendung eines sogenannten aktiven "Skyhook-Dämpfers" und

Fig. 4        ein der Darstellung der Fig. 3 vergleichbares Fahrwerksystem mit Darstellung eines semiaktiven Dämpfers und ebenfalls getrennter Regelung der Dämpfungseigenschaften einerseits sowie der Federungs- und Niveauregulierungseigenschaften andererseits;

Fig. 5        eine vollständige Darstellung der erfindungsgemäßen Gesamtkonzeption in schematischer Form mit einem gemeinsamen Regler, der die beiden vorhandenen aktiven Stellglieder zwischen Radaufhängung und Aufbau beaufschlagt;

Fig. 6        das Blockschaltbild des Regelschemas eines vereinfachten Systems 3. Ordnung mit Luftfeder entsprechend der Darstellung der Fig. 5;

Fig. 7        den normierten Frequenzgangverlauf für ein Fahrwerkkonzept, wie es sich aus der Darstellung der Fig. 4 ergibt;

Fig. 8        schematisiert ein Blockdiagramm eines Regelschemas, das ergänzend zum Blockschaltbild der Fig. 6 und ergänzend zu den bisher für die Regelung eingesetzten Signalen noch über eine absolute Beschleunigungsrückführung verfügt;

Fig. 9        in Form eines Diagramms einen Wurzelortkurvenverlauf und

Fig. 10       den normierten Frequenzgang entsprechend Fig. 7 in drei möglichen Ausführungsbeispielen.

Beschreibung der Ausführungsbeispiele

4

Niveauregulierung mit Rückführung des relativen Einfederwegs - Analyse und Erkenntnisse

In den Figuren 1 und 2 sind schematisiert zwei Möglichkeiten von Niveauregulierungen bei Kraftfahrzeugen dargestellt, wobei in beiden Figuren der Aufbau, also der Körper des Kraftfahrzeugs mit M und das Rad mit m bezeichnet ist (Zwei-Massenmodell - Kraftfahrzeugaufbau/Rad).

In Fig. 1 wird einer Luftfeder LF eine geregelte Volumenflußrate $Q_A$ aufgrund der Wirkung eines Reglers R zugeführt, der von einem Wegsensor WS ein relatives Weg/Abstandssignal $x_{rel}$ zugeführt erhält. Parallel zur Luftfeder ist ein passiver Dämpfer D angeordnet; die Luftfeder hat die Federkonstante K, die sich als K′ bei der hydraulischen Lagerkompensation der Fig. 2 wiederfindet, die im wesentlichen der Darstellung der Fig. 1 entspricht mit der Ausnahme, daß anstelle der Luftfeder ein hydraulisches Stellglied HS vorgesehen ist, dem über ein vom Regler R′ beaufschlagtes Ventil V ein entsprechender Druckmittelfluß $Q_W$ zugeführt ist.

Der Fluß der Druckmittelmenge $Q_A$ wandelt sich für die weitere Betrachtung in eine gesteuerte, relative Geschwindigkeit $V_A$ des oberen Aufhängungspunktes; mit anderen Worten die Quelle der Volumenflußrate wird durch eine relative Geschwindigkeitsquelle ersetzt.

Zum besseren Verständnis wird als weitere Vereinfachung eingeführt, daß die dynamischen Einflüsse von Rad und Reifen vernachlässigt werden; ferner wird die Störgeschwindigkeit $V_o$ direkt dem unteren Aufhängungsmontagepunkt zugeführt.

Solange eine hinreichende passive Dämpfung zur Kontrolle der Radbewegung vorgesehen ist, ist dieses Modell für Frequenzen gültig, die oberhalb der natürlichen Aufbaufrequenz eines Kraftfahrzeugs liegen, jedoch unterhalb der natürlichen Radfrequenz. Hierbei ist angenommen, daß bei Anwendungen in Kraftfahrzeugen die natürliche Radfrequenz nahezu um eine Größenordnung höher liegt als die Frequenz des Aufbaus. Im folgenden wird auf das in Fig. 1 oder 2 dargestellte System in größerem Detail eingegangen, um so eine Vorstellung von verschiedenen Typen von Niveauregulierungen mit aktiven Aufhängungen zu gewinnen.

Die Dynamik des ungeregelten Systems (open loop system)

Aus der Darstellung der Figuren 1 oder auch 2 mit zugehörigem Bondgraph lassen sich die folgenden Statusgleichungen in Matrixform entnehmen:

$$
\begin{bmatrix} \dot{P} \\ \dot{X} \\ \dot{Q} \end{bmatrix} = \begin{bmatrix} -B/M & O & K \\ -1/M & O & O \\ -1/M & O & O \end{bmatrix} \begin{bmatrix} P \\ X \\ Q \end{bmatrix} + \begin{bmatrix} 1 & B & O \\ 0 & 1 & 0 \\ O & 1 & 1 \end{bmatrix} \begin{bmatrix} F_o \\ V_o \\ V_A \end{bmatrix} . \qquad (1)
$$

Hierbei ist $V_A$ positiv beim Einfedern, $\dot{X} = V_o - V$, $\dot{Q} = V_o + V_A - V$.

Verwendet man S als die Laplace-Transformierte Variable, dann ergibt sich das charakteristische Polynom zu

$$\Delta = S(S^2 + BS/M + K/M). \qquad (2)$$

Die Matrix der Transferfunktion lautet wie folgt:

$$\begin{bmatrix} P \\ X \\ Q \end{bmatrix} = \begin{bmatrix} S^2 & S(BS+K) & KS \\ -S/M & S^2 & -K/M \\ -S/M & S^2 & S(S+B/M) \end{bmatrix} \begin{bmatrix} F_O \\ V_O \\ V_A \end{bmatrix} \quad (3)$$

$$\Delta$$

Eine etwas einfachere Form ergibt sich, wenn man die Aufbaugeschwindigkeit des Kraftfahrzeugs zu V = P/M setzt und eine neue Version von $\Delta$ definiert:

$$\Delta' = S(MS^2 + BS + K). \qquad (4)$$

Das Ergebnis lautet

$$\begin{bmatrix} V \\ X \\ Q \end{bmatrix} = \begin{bmatrix} S^2 & S(BS+K) & KS \\ -S & MS^2 & -K \\ -S & MS^2 & S(MS+B) \end{bmatrix} \begin{bmatrix} F_O \\ V_O \\ V_A \end{bmatrix} \cdot \qquad (5)$$

$$\Delta'$$

Eine Reduktion in Parametern kann man erreichen, indem man die ungedämpfte natürliche Frequenz zu

$$\omega_n = (K/M)^{1/2} \qquad (6)$$

sowie das Dämpfungsverhältnis zu

$$\zeta = B/2(KM)^{1/2} \qquad (7)$$

setzt.

Indem man die Numeratoren und den Denominator der Gleichung (5) durch $K \cdot n$ dividiert und die dimensionsfreie Frequenzvariable

$$s = S/\omega_n \qquad (8)$$

benutzt, gelangt man zu

$$\begin{bmatrix} V \\ X \\ Q \end{bmatrix} = \frac{\begin{bmatrix} s^2\omega_n/K & s(2\zeta\ s+1) & s \\ -\ s/K & s^2/\omega_n & -\ 1/\omega_n \\ -\ s/K & s^2\omega_n & s(s+2\zeta)/\omega_n \end{bmatrix}\begin{bmatrix} F_O \\ V_O \\ V_A \end{bmatrix}}{s(s^2+2\zeta\ s+1)} \qquad (9)$$

Mit der Ausnahme der erforderlichen Dimensionsparameter in den Numeratoren enthält diese Form lediglich das Dämpfungsverhältnis als Parameter.

Stabilität mit Rückführung der Auslenkung

Im folgenden wird ein einfaches Schema einer Niveauregulierung, bei dem die Auslenkung X der Aufhängung mittels einer einfachen proportionalen Verstärkung g zurückgeführt ist, betrachtet.

$$V_A = gX, V_B = o . \qquad (10)$$

Das Verfahren läuft so ab, daß man die Gleichung (10) in die zweite Gleichung der Gleichung (5) substituiert. Dies ergibt

$$X = \frac{-\ SF_O + MS^2V_O}{\Delta' + Kg} = \frac{-SF_O + MS^2V_O}{MS^3 + BS^2 + KS + Kg} \qquad (11)$$

Werden diese Ergebnisse in den Gleichungen (10) oder (11) benutzt und dann in Gleichung (5) substituiert, dann ergibt sich die Matrix der geregelten Übertragungsfunktion (closed loop transfer function matrices) zu

$$\begin{bmatrix} V \\ X \\ Q \end{bmatrix} = \frac{\begin{bmatrix} s^2 & BS^2 + KS + Kg \\ -\ S & MS^2 \\ -\ (S+g) & MS(S+g) \end{bmatrix}\begin{bmatrix} F_O \\ V_O \end{bmatrix}}{(MS^3 + BS^2 + KS + Kg)} . \qquad (12)$$

Benutzt man die Gleichungen (69 bis (8), setzt man

$$g' \equiv g/\omega_n$$

und dividiert man die Numerator- und Denominator-Terme durch $K\bullet\omega_n$, dann gelangt man zur normierten Version:

$$\begin{bmatrix} V \\ X \\ Q \end{bmatrix} = \cfrac{\begin{bmatrix} s^2\omega_n/K & \Big| & 2\zeta s^2+s+g' \\ -s/K & \Big| & s^2/\omega_n \\ -(s+g')/K & \Big| & s(s+g')/\omega_n \end{bmatrix} \begin{bmatrix} F_o \\ V_o \end{bmatrix}}{s^3 + 2\zeta s^2 + s + g'} \qquad (13)$$

Die Transferfunktionen $X/F_o$ gibt eine Null-Ablenkung im eingeschwungenen Zustand an für konstante zugeführte Belastungen $F_o$, was dem gewünschten Niveauregulierungseffekt entspricht. Im folgenden wird nun die Geschwindigkeit untersucht, bei welcher dieser Niveauregulierungseffekt auftreten kann oder die erlaubten Werte der Verstärkungen g oder g'.

Die Wirkungen der Verstärkungsvariationen können am besten erfaßt werden, indem man die Wurzelortskurven der charakteristischen Polynome aufzeichnet.

$$s(s^2 + s\zeta s + 1) + g' = 0 \qquad (14)$$

Betrachtet man diese Bedingung im regelungstechnischen Sinn, dann ergeben sich drei Pole im nichtgeregelten Fall (open loop poles) und keine Nullstelle.

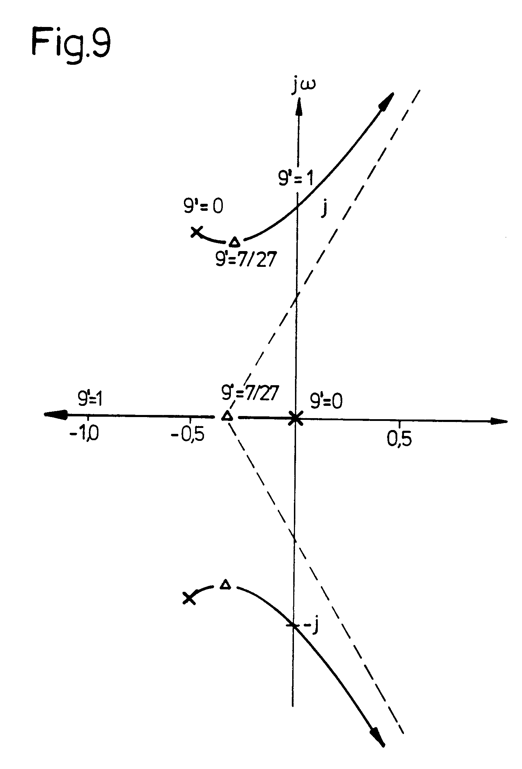

Die Darstellung der Fig. 9 zeigt den entsprechenden Wurzelortskurvenverlauf. Basierend auf dem normierten charakteristischen Polynom der Gleichung (14), liegen die drei Pole bei offener Schleife bei

$$s = 0, -\zeta \pm j(1 - \zeta^2)^{1/2} \qquad (15)$$

und sind in Fig. 9 für den Fall von $\zeta$ = 0,5 dargestellt.

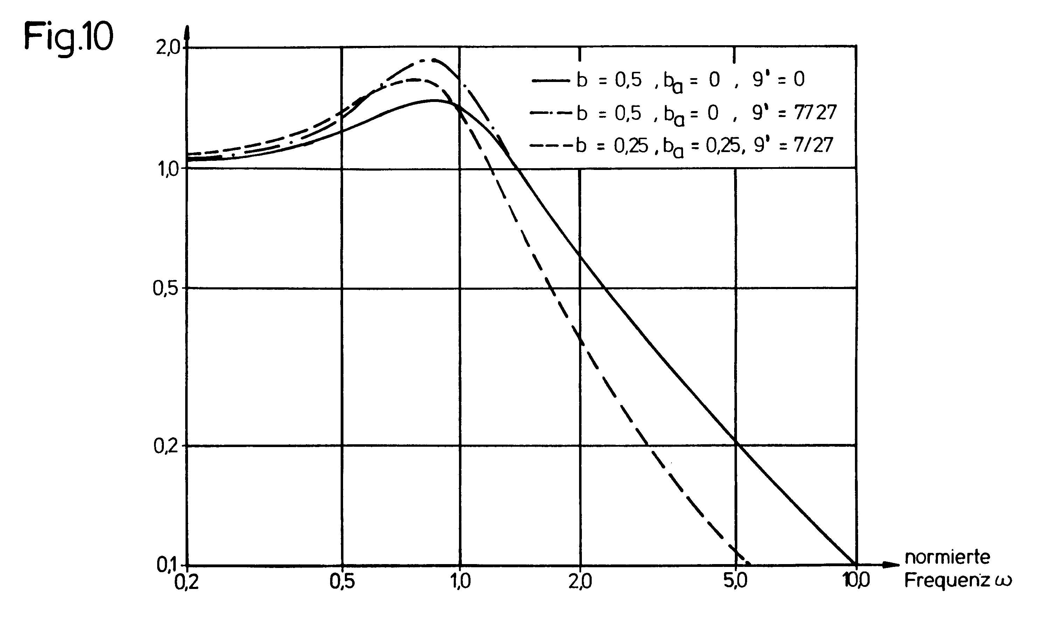

Für größere Werte von g' bewegt sich eine Wurzel längs der negativen realen Achse nach außen, und das komplexe Wurzelpaar bewegt sich in Richtung auf die gestrichelt angedeuteten Asymptoten. Diese Asymptoten gehen aus vom Schwerkraftzentrum der Polkonfiguration bei offener Schleife bei

$$c.g. = 2\zeta/3 \qquad (16)$$

im allgemeinen und bei dem in Fig. 10 dargestellten Ausführungsbeispiel bei -1/3.

Der reale Pol nahe dem Ursprung für niedrige g'-Werte bezieht sich auf die langsame Reduktion bei statischer Ablenkung, verursacht durch stetig einwirkende Belastung konventioneller Niveauregelungssysteme. Die schwingenden Pole (oscillatory poles) beschreiben die Tiefpaßfilterwirkung von Straßenstöreinflüssen bei konventionellen passiven Aufhängungen.

Wird g' vergrößert, dann steigt auch die Reaktionsgeschwindigkeit, die auf die reale Wurzel zurückzuführen ist, an, jedoch nehmen die komplex-konjugierten Pole zunächst in Frequenz und Dämpfung ab und steigen dann in der Frequenz wieder an, werden jedoch in der Dämpfung zunehmend geringer, bis das System bei g' = 1 instabil wird.

Es kann daher gezeigt werden, daß der reale Pol an der Stelle $\sigma_r$ und der reale Teil des komplexen Paars bei $\sigma_p$ dem folgenden Gesetz gehorcht:

$$\sigma_r + 2\sigma_p = -2\zeta . \qquad (17)$$

Dies zeigt, daß dann, wenn $\sigma_r$ für höhere Reaktionsgeschwindigkeiten stärker negativ gemachtr wird, die realen Teile der komplexen Pole stärker positiv werden müssen. Die kleinen Dreiecke (in der Zeichnung der Fig. 9) zeigen den Fall, bei welchem die realen Teile gleich sind. Dies ergibt sich bei

$$\sigma_r = \sigma_p = -2\zeta/3 \qquad (18)$$

was den gleichen Wert wie in Gleichung (16) ergibt. Der Gewinn oder die Verstärkung bei dem in Fig. 9 gezeigten Ausführungsbeispiel liegt hierfür bei g′ = 7/27. Dies stellt eine Art optimaler Verstärkung dar, weil niedrigere Verstärkungen in einer langsameren Reaktion der realen Wurzel resultieren, während höhere Werte in einem langsameren Abfall der Oszillationen oder Schwingungen resultieren, die den komplexen Wurzeln zugeordnet sind. Ganz eindeutig verringert die Einführung einer schnellen Niveauregulierung die Dämpfung des komplexen Polpaars.

Diese Betrachtung der Wurzelortskurven ergibt, daß ähnliche aktive Systeme gebaut werden können, die die Systeme der Fig. 1, aber auch der Fig. 2 in entsprechender Anpassung benutzen. In beiden Fällen verringert die Niveauregulierung die Dämpfung und kann zu Instabilitäten führen, wenn die Dämpfung anfänglich zu niedrig angesetzt wurde. Dies könnte dazu führen, daß eine einen solchen Fehler erfassende Einrichtung oder ein Sensor erforderlich wird, der die Wirkung der Niveauregulierung dann ausschaltet oder verhindert, wenn das System instabil wird oder der die Verstärkung so anpassen kann, daß einer sich verschlechternden Dämpfung Rechnung getragen wird. Ein positiver Aspekt bei dieser Art von aktiven Federungsaufhängungen besteht darin, daß eine übliche passive Federung oder Aufhängung verbleibt, wenn der Einfluß der niveauregulierung abgeschaltet wird, so daß sich auf diese Weise ein Sicherheitssystem (fail-safe) ergibt.

Möglichkeiten zur Leistungsreduzierung

Eine aktive Aufhängung bei einer Niveauregulierung in ihrer einfachsten Form reagiert auf alle Gesichtspunkte einer Auslenkung der Aufhängung, obwohl der Hauptvorteil in ihrer Fähigkeit begründet ist, niedrigfrequente Auslenkungen zu beseitigen, die sich aus statischen Belastungen oder aus durch bestimmte Vorgänge induzierten Kräften ergeben. Es ist daher logisch, höherfrequente Komponenten im Auslenkungsbereich, die auf eine Radbewegung zurückzuführen sind, auszufiltern. Dabei kann ein einfaches Tiefpaßfilter mit einer Knickfrequenz (Grenzfrequenz) nahe der Frequenz, bei welcher das Rad zu springen anfängt, die Leistung reduzieren, wenn die abgetastete Auslenkung zunächst dem Filter zugeführt wird, bevor der Mechanismus der Niveauregulierung aktiviert wird. Die Filterwirkung kann dabei elektronisch oder auch mechanisch mit Hilfe eines Ventilmechanismus realisiert werden.

Eine wesentlichere Maßnahme zur Reduzierung der Leistungsanforderungen kann darin bestehen, daß man eine Art Leistungsanforderungstabelle aufstellt, durch welche (zu gegebenen Bedingungen) die Verstärkung reduziert wird oder das System ganz abgeschaltet wird, bis es wieder benötigt wird. Die Kriterien zur Verwendung einer hohen Verstärkungseinstellung können solche Angaben wie Größe der Federungsauslenkung, des Bremsdrucks, der seitlichen Beschleunigung, der Verdrehrate des Lenkrads u. dgl. umfassen. Ein solches System wird während der Betriebszeit eines typischen Fahrzeugs gespeicherte Energie nur zu einem geringen Anteil verbrauchen.

Als Schlußfolgerung bietet sich daher die Feststellung an, daß aktive Federungskonzepte auf der Basis einer Niveauregulierung Ablenkungen oder Federungseinwirkungen bei niedrigen Frequenzen eliminieren können, die auf äußere Belastungen oder auf Krafteinwirkungen zurückzuführen sind, die durch die Handhabung, also das Manövrieren eines Fahrzeugs im weitesten Sinne entstehen. Solche Federungen können daher potentiell eingesetzt werden zur Kontrolle und Regelung von steifen Aufbaubewegungen bei Kraftfahrzeugen wie beispielsweise Rollbewegungen und Neigungen um die Querachse (pitch and roll) sowie zur Erzeugung bzw. Ermöglichung von Steuerbefehlen zur Veränderung der Fahrhöhe im Bereich der Vorder- oder der Hinterräder aus aerodynamischen oder aus sonstigen Gründen. Dabei werden dann die höherfrequenten Störungen, die aus Straßenunebenheiten resultieren, durch passive Nachgiebigkeit und Dämpferelemente gefiltert und aufgefangen.

Auf diese Weise arbeitet die Niveauregulierung wie eine integrierte Wirkungssteuerung oder -regelung und kann zu Stabilitätsproblemen dann führen, wenn die Rückkopplungsverstärkung zu groß ist mit Bezug auf die Dämpfung der Federung. Hieraus ergibt sich, daß die Verstärkung der Niveauregulierung zu verändern ist in Übereinstimmung mit einer Veränderung der Dämpfung bei einer Federung mit variablen Dämpfungsmöglichkeiten. Darüber hinaus ermöglicht die Verwendung sogenannter semiaktiver Dämpfungen oder Dämpfermittel eine hohe Dämpfung von Aufbaubewegungen und daher eine schnelle Niveauregulierung ohne eine übermäßige Übertragung von Störungseinflüssen aus der Radbewegung.

Trotz der Annahme, daß eine aktive Federung, die eine schnelle Niveauregulierung benutzt, einen großen Leistungseinsatz erforderlich machen könnte, gibt es eine Vielzahl von technischen Möglichkeiten, um die erforderliche Leistung zu reduzieren und gering zu halten. Einige dieser Möglichkeiten reduzieren die Wirkung, die hochfrequente Radbewegungen auf die Niveauregulierung ausüben. Andere Möglichkeiten können eingesetzt werden in Verbindung mit einer elektronisch geregelten Steifigkeit und Dämpfung, um so die Verstärkung der Niveauregulierung zu variieren oder die Wirkung der Niveauregulierung abzuschalten. Auf diese Weise lassen sich aktive Federungskonzepte herstellen, die im Durchschnitt nur sehr wenig Energie benötigen, die aber dennoch in der Lage sind, in kritischen Situationen unter Benutzung oder Freisetzung gespeicherter Energie kraftvoll zu reagieren.

Die Kombination einer semiaktiven Dämpfungssteuerung oder Regelung, einer variablen Steifigkeit und von Dämpfungsmitteln sowie des Einsatzes einer entsprechend vervollkommneten, schnellen Niveauregulierung können daher eine aktive Federung neuer Art mit vielen Vorteilen bilden, die sich gegenüber üblichen konstant passiven Aufhängungen oder Federungen ergeben, wobei dennoch in wünschenswerter Weise nur geringe Leistungsanforderungen und abgemilderte Probleme bei Ausfall auftreten.

Niveauregulierung mit Rückführung des relativen Einfederwegs und Aufnahme zusätzlicher aktiver Dämpfung mit Rückführung der Aufbaugeschwindigkeit sowie Vergleich mit den weiter vorn gemachten Ausführungen

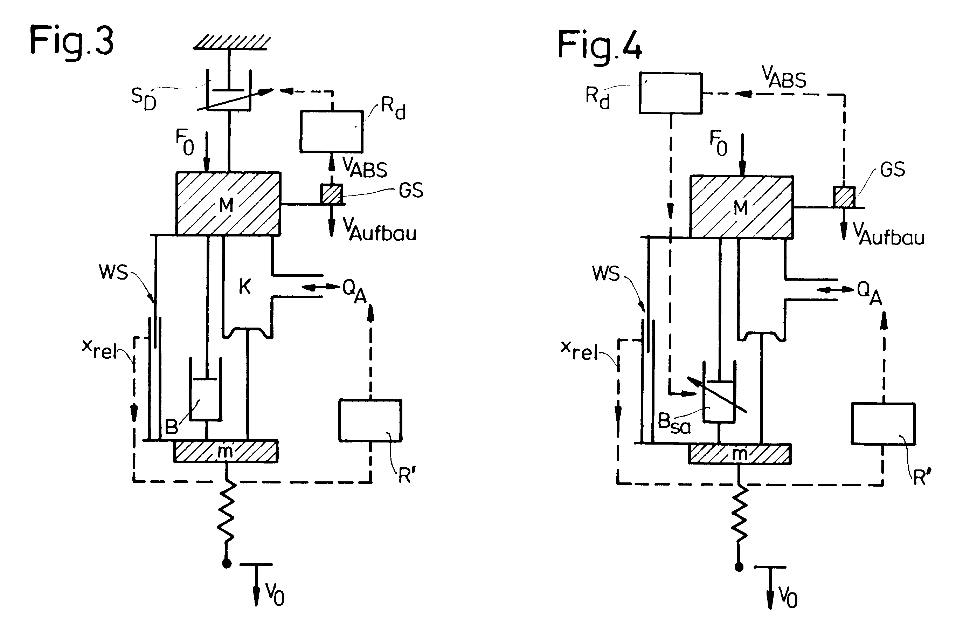

Die Darstellung der Figuren 3 und 4 zeigt vereinfachte Aufhängungs- und Federungsmodelle, jedoch unter Einschluß einer aktiven Dämpfung mit dem Koeffizienten $B_A$. Wie in Fig. 3 gezeigt, kann es sich bei diesem Dämpfer um einen klassischen "Himmelhakendämpfer" (skyhook damper) handeln, der der Masse eine Kraft aufprägt, die proportional zu ihrer absoluten Geschwindigkeit V ist. Würde diese Kraft durch die Federung realisiert werden, dann wäre ein aktiver Kraftgenerator erforderlich und eine zusätzliche Kraftkomponente würde auf Rad und Reifen einwirken.

Es kann sich aber auch um den Einsatz eines sogenannten und für sich gesehen bekannten semiaktiven Dämpfers handeln, wie er genauer in der weiter vorn schon angezogenen EP-A-0197316 beschrieben ist.

Bei beiden Darstellungen der Figuren 3 und 4 handelt es sich um die Kombination eines Luftfederungssystems (oder hydraulischer Fahrwerksaufhängung - dargestellt ist eine Luftfederung), kombiniert mit mindestens teilweisen aktiven Dämpfungsmitteln. Es sind wiederum Weg- bzw. Lagesensoren WS vorgesehen, die einem Regler für die Niveauregulierung, die ein schnelles, Belastungswechsel kompensierendes System - FLLS sein kann, das aktuelle Lagesignal $x_{rel}$ zuführen.

Unabhängig hierzu erhält ein separater Dämpfungsregler Rd von einem Geschwindigkeitssensor GS ein absolutes Geschwindigkeitssignal $V_{abs,Aufbau}$ zugeführt. Dabei verfügt der aktive "Skyhook"-Dämpfer wahlweise über erste passive Dämpfermittel B sowie über den aktiven Skyhook-Dämpfer SD, während das Ausgangssignal des Dämpfungsreglers Rd bei dem Federungssystem mit semiaktiver Dämpfung einem semiaktiven Dämpfer Bsa zugeführt ist.

Die modifizierte Statusgleichung für die Fahrwerkssysteme der Figuren 3 und 4 lautet entsprechend der Gleichung (1) hier:

$$
\begin{bmatrix} \dot{P} \\ \dot{X} \\ \dot{Q} \end{bmatrix} = \begin{bmatrix} -(B+B_A)/M & O & K \\ -1/M & O & O \\ -1/M & O & O \end{bmatrix} \begin{bmatrix} P \\ X \\ Q \end{bmatrix} + \begin{bmatrix} 1 & B & O \\ O & 1 & O \\ O & 1 & 1 \end{bmatrix} \begin{bmatrix} F_O \\ V_O \\ V_A \end{bmatrix} . \quad (19)
$$

Hierbei ist das charakteristische Polynom

$\Delta = S(S^2 + (B+B_A)/M + K/M)$    (20)

und die äquivalente Übertragungsfunktionmatrix entsprechend Gleichung (3) lautet

$$\begin{bmatrix} P \\ X \\ Q \end{bmatrix} = \begin{bmatrix} S^2 & S(BS+K) & KS \\ -S/M & S(S+B_A/M) & -K/M \\ -S/M & S(S+B_A/M) & S(S+(B+B_A)/M) \end{bmatrix} \begin{bmatrix} F_O \\ V_O \\ V_A \end{bmatrix} \qquad (21)$$

Die geringfügig einfacheren Versionen, entsprechend den Gleichungen (4) und (5) sind

$$\Delta' = S(MS^2 + (B+B_A) S + K) \qquad (22)$$

$$\begin{bmatrix} V \\ X \\ Q \end{bmatrix} = \frac{\begin{bmatrix} S^2 & S(BS+K) & KS \\ -S & S(MS+B_A) & -K \\ -S & S(MS+B_A) & S(MS+B+B_A) \end{bmatrix}}{\Delta'} \begin{bmatrix} F_O \\ V_O \\ V_A \end{bmatrix} \qquad (23)$$

Wiederholt man die weiter vorn schon durchgeführte Analyse, dann ergibt sich die Matrix der Übertragungsfunktion entsprechend Gleichung (10) bei geschslossener Schleife (Regelfunktion) zu:

$$\begin{bmatrix} V \\ X \\ Q \end{bmatrix} = \frac{\begin{bmatrix} S^2 & BS^2 + KS + Kg \\ -S & S(MS+B_A) \\ -(S+g) & (MS+B_A)(S+g) \end{bmatrix}}{MS^3 + (B+B_A)S^2 + KS + Kg} \begin{bmatrix} F_O \\ V_O \end{bmatrix} \qquad (24)$$

Verwendet man hierbei die Gleichungen (6-89 und

$$\zeta_a \equiv B_A/2 \ (KM)^{1/2}, \ g' \equiv g/\omega_n, \qquad (25)$$

dann gelangt man zu folgender normierter Übertragungsfunktion:

11

$$\begin{bmatrix} V \\ X \\ Q \end{bmatrix} = \frac{\begin{bmatrix} s^2\omega_n/K & \quad 2\zeta\, s^2 + s + g' \\ -\, s/K & \quad s^2/\omega_n + 2\zeta_a s/\omega_n \\ -\,(s+g')/K & \quad (s+2\zeta_a)(s+g')/\omega_n \end{bmatrix}\begin{bmatrix} F_o \\ V_o \end{bmatrix}}{s^3 + 2(\zeta + \zeta_a)s^2 + s + g'} \qquad (26)$$

Das charakteristische Polynom bei geschlossener Schleife entsprechend Gleichung (14) lautet daher

$$s(s^2 + 2(\zeta + \zeta_a)s + 1) + g' = o \qquad (27)$$

Ein Vergleich der Gleichung (14) mit der Gleichung (27) ergibt, daß durch die Einführung der aktiven Dämpfung die Wurzelortskurve sich nicht sehr stark verändert hat mit der Ausnahme, daß die Pole bei offener Schleife durch eine Kombination der aktiven und passiven Dämpfung gedämpft sind. Ferner ergeben sich verschiedene Änderungen bezüglich der Numeratoren der Übertragungsfunktionen in der Gleichung (26), verursacht durch die Einführung der aktiven Dämpfung. Einige der wesentlichsten Wirkungen können durch Berechnung der Funktionen des Frequenzverlaufs erfaßt werden.

Berechnung des Frequenzverlaufs

Obwohl der Wurzelortskurvenverlauf in den aktiven und passiven Fällen identisch ist, falls $\zeta$ im passiven Fall gleich ist dem Wert $\zeta + \zeta_a$ im aktiven Fall, ist die Reaktion auf Eingangsgrößen der Straßenbeschaffenheit unterschiedlich, da die Numeratoren einiger Übertragungsfunktionen unterschiedlich sind. Beispielsweise lautet die Übertragungsfunktion, die die Massengeschwindigkeit V auf die Eingangsgeschwindigkeit $V_o$ bezieht,

$$\frac{V}{V_o} = \frac{2\zeta\, s^2 + s + g'}{s^3 + 2(\zeta + \zeta_a)s^2 + s + g'} \qquad (28)$$

Die Wurzelortskurve der Fig. 9 trifft zu, wenn $\zeta + \zeta_a = 0{,}5$ ist, die Funktion des Frequenzverlaufs variiert jedoch in Abhängigkeit davon, wieviel von der totalen Dämpfung von der passiven Dämpfung $\zeta$ allein beigetragen wird. Für diesen Fall stellt der Wert von $g' = 7/27$ noch immer eine optimale Bestimmung der Niveauregulierungsverstärkung dar, in welcher die Zeitkonstanten der drei Wurzeln auf Übereinstimmung gehalten sind.

Fig. 10 zeigt die Größe der Gleichung (45) für eine sinusförmige Eingangsgröße im Bereich normierter Frequenzen. Es sind drei Fälle dargestellt. Ist zunächst $g' = 0$, dann liegt überhaupt keine Niveauregulierung vor, und die Federung ist eine konventionelle passive Federung mit einem vergleichsweise hohen Dämpfungsverhältnis von 0,5. Der Kurvenverlauf oder die Reaktion der Federung fällt oberhalb der natürlichen Frequenz vergleichsweise langsam ab, was eine nur schwache hochfrequente Isolierung bzw. eine vergleichsweise unruhige Fahrt mit einem entsprechenden Kraftfahrzeug angibt. Aus diesem Grunde verwenden die meisten passiven Federungen weniger Dämpfungswirkung und akzeptieren eine größere Verstärkung in der Nähe der Resonanzfrequenz als Teil des hier zu schließenden Kompromisses. Wie der Wurzelortskurvenverlauf jedoch zeigt, führt eine Reduzierung der Poldämpfung bei offener Schleife zu einer größeren Begrenzung im Werte g' und zu einer langsameren Niveauregulierungsreaktion, da die Einführung der Niveauregulierung dazu neigt, die Systemdämpfung mit zunehmender Verstärkung zu reduzieren, wobei sich die Reaktionsgeschwindigkeit der realen Wurzel vergrößert.

Dieser Effekt läßt sich im Kurvenverlauf für die Werte $\zeta = 0{,}5$, $\zeta_a = 0$, $g' = 7/27$ in Fig. 10 erkennen. Wie der Wurzelortskurvenverlauf der Fig. 9 angibt, haben die günstigsten Pole bei geschlossener Schleife eine niedrigere natürliche Frequenz und eine reduzierte Dämpfung, verglichen mit den Polen bei geöffneter Schleife. Daher ist, obwohl dieses aktive System den Vorteil einer statischen Nullablenkung sowie eines lediglich geringen Anstiegs in der Resonanzreaktion aufweist, die Hochfrequenzisolierung ein Kompromiß aufgrund der großen, hier erforderlichen passiven Dämpfung.

Wenn sich jedoch die gesamte Dämpfung zwischen den aktiven und passiven Komponenten aufteilt, ergeben sich beträchtliche Verbesserungen. In den Kurvenverläufen der Fig. 10 ist dargestrellt, daß dann, wenn $\zeta_a = \zeta = 0{,}25$ ist, sowohl die Resonanz reduziert als auch die Hochfrequenzisolierung verbessert ist. Dies liegt daran, daß lediglich der Wert $\zeta$ in dem Numerator der Gleichung (28) auftritt. Eine Federung oder Aufhängung, die in dieser Weise ausgebildet ist, verfügt daher über hervorragende Isolierungseigenschaften als auch über statische Nullauslenkung. Dabei kann die Niveauregulierung hilfreich bei der Überwindung und der Kontrolle von Roll- und Querneigungsbewegungen bei Übergangsmanövern sein, wobei die statische Fahrhöhe bei vergleichsweise hohen Beträgen einprogrammiert werden könnte.

Man kann daher die Schlußfolgerung ziehen, daß eine auf Niveauregulierung und einfacher Rückführung der Auslenkung basierende aktive Federung in der Geschwindigkeit ihrer Reaktion durch die Dämpfung im offenen Schleifensystem (keine Regelung) begrenzt ist. Wird die Dämpfung in diesem Fall vollständig passiv erzeugt, dann stellen die Eigenschaften der Hochfrequenzisolierung der Federung einen Kompromiß dar, genau wie im Fall einfacher passiver Federung. Das System kann jedoch durch aktive Dämpfungskräfte stabilisiert werden, die die Hochfrequenzisolierung nicht beeinträchtigen. Daraus ergibt sich, daß eine aktive Dämpfung für einen solchen aktiven Federungstyp von erheblichem Vorteil ist.

Betrachtet man lediglich die Übertragungsfunktionen der Gleichung (28), dann kann man zu der Schlußfolgerung gelangen, daß eine passive Dämpfung in keiner Weise erwünscht ist. Diese Schlußfolgerung ist auf der Basis der hier durchgeführten Analyse mit einem einzigen Freiheitsgrad korrekt, komplexere Modelle zeigen jedoch, daß ein gewisser passiver Dämpfungsbeitrag notwendig ist. Dies führt zur sinnvollen Benutzung semiaktiver Dämpfer, die eine Dämpfungskraft mit aktiven und passiven Komponenten erzeugen, da die Federungskraft, die die Summe der aktiven und passiven Kräfte darstellt, eher weniger häufig Leistung in das Aufhängungs- oder Federungssystem einleitet. Daher ist ein semiaktiver Dämpfer, der ausschließlich Kräfte erzeugen kann, die in der Vernichtung bzw. dem Abbau von Leistung resultieren, in der Lage, die meisten Vorteile und Vorzüge eines aktiven Dämpfers einzubringen, ohne jedoch die Notwendigkeit externer Leistungszufuhr. Daher kann ein solcher semiaktiver Dämpfer die Verwendung einer Niveauregulierung, bei der entsprechende leistungsreduzierende Maßnahmen getroffen sind, in vorteilhafter Weise ergänzen.

Die soeben durchgeführten Analysen aktiver Federungskonzepte umfassen auch aus Stabilitätsgründen die Einbindung aktiver und passiver Dämpfung. Im folgenden wird erläutert, daß sich aus der Hinzufügung einer Rückführgröße der isolierten Massengeschwindigkeit im Regelgesetz der Niveauregulierung verschiedene Vorteile ergeben. Zunächst wird das integrale Steuerverhalten - statische Nullauslenkung bei Belastungsänderungen - aufrechterhalten. Ferner wird die Stabilität verbessert, wobei tatsächlich willkürlich Pole mit geschlossener Schleife (Regelung) erreicht werden können. Schließlich ergibt sich keine Verschlechterung in der Isolation hochfrequenter auf die Straßenbeschaffenheit zurückgehender Störungseinflüsse. Durch die Anordnung von Blockdiagrammen von Federungen in Standardregelform und unter Verwendung von Synthesetechniken für die Positionierung der Pole läßt sich eine nahezu ideale Federung erzielen, die auch dann einwandfrei arbeitet, wenn die Niveauregulierung nicht zur Wirkung kommt.

Die bisherigen Ergebnisse lassen sich wie folgt zusammenfassen.

Weiter vorn wurde die einfachste Form einer aktiven Federung auf der Basis einer Niveauregulierung mit Rückführung der Federungsauslenkung analysiert. Dabei konnte festgestellt werden, daß durch die Wirkung der Niveauregulierung ein System erzeugt würde, bei dem sich eine weniger wirksame Dämpfung ergibt als bei einer ursprünglich passiven Federung. In dieses System ist, ebenfalls weiter vorn, ein aktives Dämpfungskonzept eingeführt worden. Dieses erlaubt eine Reduzierung im passiven Dämpfungsverhalten und führt zu einer Verbesserung in der Isolierung gegenüber hochfrequenten Straßenbeschaffenheits-Störgrößen. In praktischen Ausführungsbeispielen kann dabei ferner angenommen werden, daß sich hier die günstigsten Vorteile einer aktiven Dämpfung durch den Einsatz semiaktiver Dämpfer erzielen lassen.

Die insoweit untersuchten Federungen und Aufhängungssysteme stellen jedoch teilweise Kompromisse dar, und zwar aufgrund der elementaren Natur der verwendeten Rückführungsschemata. In den der Steuerung oder Regelung zugrundegelegten Gesetzen sind nicht genug Koeffizienten verwendet, um das System vollständig dynamisch anpassen zu können. Die beiden Parameter g und $B_A$ sind nicht in der Lage, in beliebiger Weise die drei unabhängigen Koeffizienten der charakteristischen Gleichung des Systemmodells dritter Ordnung zu beeinflussen. Daher müssen einige Gesichtspunkte im Arbeitsverhalten der Federung oder Aufhängung Kompromissen unterworfen werden, um im geregelten System (closed loop system) zu einem sinnvollen Stabilitätsgrad zu gelangen.

Im folgenden wird daher entsprechend einem weiteren Merkmal der Erfindung ein weiterer Rückführkoeffizient eingeführt, indem man eine auf die Geschwindigkeit V der isolierten Masse bezogene Rückführgröße dem Mechanismus der Niveauregulierung zuführt. Die Verwendung der Geschwindigkeitsgröße V als Rückführsignal hat mehrere Gründe. Zunächst wird die gleiche Größe für die aktive oder semiaktive Dämpfung benötigt. Daher ist ein zusätzlicher Sensor oder ein Abtastorgan nicht erforderlich. Ferner zerstört dieser zusätzliche Term im Steuer- oder Regelgesetz das Federungsverhalten bei statischer Nullauslenkung nicht. Schließlich beeinträchtigt eine solche Rückführgröße auch die Isolierung der aufgehängten Masse gegenüber auf Störungen der Straßenbeschaffenheit zurückzuführenden Eingangsgrößen nicht.

Bei diesem Typ aktiver Federung liegt der die Isolation (zwischen Fahrzeugaufbau und Rad) betreffende Hauptnachteil in der erforderlichen Menge passiver Dämpfung, die notwendig ist, um die Radbewegung zu kontrollieren. Andererseits läßt sich mit einer solchen aktiven Federung ein nahezu ideales Verhalten realisieren. Die nachfolgenden Ausführungen betreffen diese Möglichkeit, wobei die Federung nur geringe Leistungsanforderungen stellt und im Falle eines Ausfalls in aktiven Bereichen oder dann, wenn zur Energieeinsparung aktive Teile abgeschaltet werden, in der Lage ist, sich in eine vernünftige passive Federung zurück zu entwickeln.

Schnelle Niveauregulierung (FLLS) mit aktiver Dämpfung und Rückführung der absoluten Aufbaugeschwindigkeit $V_{Aufbau}$ auf beide Komponenten und zusätzliche Rückführung des relativen Einfederwegs $x_{rel}$ auf die Niveauregulierungskomponente - Analyse im Vergleich mit 1) sund 2)

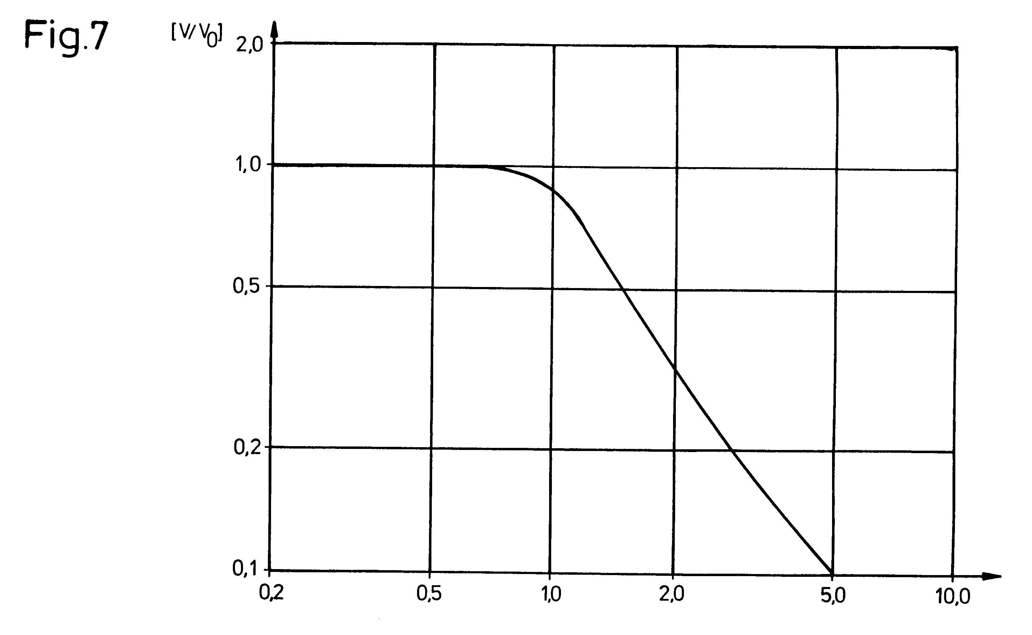

In Fig. 5 ist ein linearisiertes und stark vereinfachtes Systemmodell für ein solches Federungssystem dargestellt, wobei die Fig. 6 das Blockdiagramm der geschlossenen Regelschleife dieses Systems 3. Ordnung mit Luftfeder und semiaktivem Dämpfer ohne Berücksichtigung der Raddynamik, jedoch unter Vorgabe des Einfederweges und Rückführung der Absolutgeschwindigkeit darstellt. Die hierzu noch gehörende Fig. 7 zeigt, insbesondere verglichen mit den sich auf die bisherigen Erläuterungen beziehenden Kurvenverläufen der Fig. 10, den vorteilhaften Verlauf des Frequenzganges bei einem solchen Federungssystem.

Der grundsätzliche Aufbau der in Fig. 5 gezeigten, vervollständigten Ausführungsform der Erfindung ähnelt im Prinzip der Ausführungsform der Fig. 4 und umfaßt neben der Aufbaumasse M, der Radmasse m, dem semiaktiven Dampfer $B_{sa}$ und der zur FLLS-Vorrichtung gehörenden Luftfeder K einen in diesem Fall gemeinsamen Regler R″.

Die FLLS-Vorrichtung (Luftfeder) ist hier vervollständigt durch einen von einem Kompressor Ko beaufschlagten Speicher Sp, der über ein vom Regler durch ein erstes FLLS-Regelsignal gesteuertes Steuerventil V′ die Luftfeder K beaufschlagt. Ein zweites Regelsignal SA gelangt vom Regler zum semiaktiven Dämpfer $B_{sa}$, wobei dem Regler wie schon bei den vorhergehenden Darstellungen vom Lagesensor WS der relative Einfederweg $x_{rel}$ zugeführt ist sowie ein in diesem Fall von einem Beschleunigungssensor BS abgeleitetes absolutes Geschwindigkeitssignal $V_{abs}$ des Aufbaus. Dabei gelangt das Ausgangssignal $a_{Aufbau}$ des Beschleunigungssensors WS über ein Bandfilter BF als in seinen Spektralanteilen gefiltertes Signal

$$a^{*}_{Aufbau}$$

auf einen Integrator I, der das absolute Geschwindigkeitssignal erzeugt.

Die Dämpferkraft ergibt sich dann zu

$$F_D = F_D(x_{rel}, V_{abs}, (V_{rel})),$$

die Kraft der Luftfeder zu

$$F_L = F_L(x_{rel}, V_{abs}).$$

Das zum vereinfachten Systemmodell der Fig. 5 gehörende Blockdiagramm der Zustandsgrößen, welches Regler mit Regelstrecke und Rückführungen umfaßt, enthält einen Integrator $I_x$, der aus seiner Eingangsgröße entsprechend $V_{rel}$ (Federungsauslenkungsrate $\dot{x}$) die gesteuerte Ausgangsgröße $x_{rel}$ (relativer Einfederweg) erzeugt. Es ist eine Eingangsgröße $x_c$ als Führungsgröße definiert, ferner eine Fehlergröße E, wobei eine Geschwindigkeitsrückführung eingeführt ist, die über die Verstärkung h wirkt. Die Größen $F_o$ und $V_o$ treten als Störgrößen auf; der Einfluß des semiaktiven Dämpfers ist in die beiden Einflußgrößen $B_A$ und B aufgeteilt, die an den Rückführschleifen um den Block 1/SM herum beteiligt sind und daher eine Dämpfung der schwingungsfähigen Wurzeln sichern. Dabei reagiert der Block $B_A$ allein auf die Größe der absoluten Aufbaugeschwindigkeit $V_{abs}$, während der Block B auf die Größe $V_{abs}$-$V_o$ reagiert.

Aus der Darstellung der Fig. 6 wird ferner klar, daß die Wirkung des Integrators auf den Block K/S aktiv ist. Dies bedeutet, daß, obwohl die Auslenkung lediglich unter proportionaler Regelung steht, sich ein I-Anteil der Regelung ergibt, und zwar aufgrund der Natur des Systems bei geöffneter Schleife. Die Rückführung von V ändert nicht den Umstand, daß im eingeschwungenen Zustand die Regelabweichung in der Auslenkung gegen Null gehen muß, da im Gleichgewichtszustand V verschwindet, solange wie $V_o$ keine Komponente des eingeschwungenen Zustands aufweist. Dies bedeutet, daß V nicht als absolute Geschwindigkeit definiert werden darf mit Bezug auf einen willkürlichen Trägheitskoordinatenrahmen, sondern als eine Geschwindigkeit mit Bezug auf ein durchschnittliches Straßenbeschaffenheitsprofil, für welches $V_o$ im Durchschnitt verschwindet.

Die Eigenschaften der geschlossenen Regelschleife eines solchen Federungssystems können unter Verwendung des Blockschaltbildes der Fig. 6 abgeleitet werden; wegen der mehrfachen, hier vorhandenen ineinander verschachtelten Regelschleifen ist es aber einfacher, die Ergebnisse der weiter vorn abgeleiteten Übertragungsfunktionsmatrix zu verwenden. Setzt man in diesem Fall der Einfachheit halber die Führungsgröße $x_c$ zu Null, dann kann die weiter vorn angegebene Gleichung (10) wie folgt ersetzt werden:

$$V_A = gX - hV, \quad V_B = 0 \qquad (29)$$

Verwendet man die Gleichung (22) und die ersten beiden Gleichungen der Gleichung (23), dann ergibt sich

$$\Delta'V = S^2F_o + S(BS+K)V_o + KS(gX-hV) \qquad (30)$$
$$\Delta'X = -SF_o + S(MS+B_A)V_o - K(gX-hV) \qquad (31)$$

Werden diese Gleichungspaare gleichzeitig gelöst und die Ausdrücke für V und X mit den letzten Gleichungen für Q in den Gleichungen (22) und (23) verwendet, dann ergeben sich der Gleichung (24) entsprechend sechs Übertragungsfunktionen. In diesem Fall werden lediglich die beiden wichtigsten Übertragungsfunktionen untersucht.

$$\frac{V}{V_o} = \frac{BS^2 + KS + Kg}{MS^3 + (B+B_A)S^2 + K(1+h)S + Kg} \qquad (32)$$

$$\frac{X}{F_o} = \frac{-S}{MS^3 + (B+B_A)S^2 + K(1+h)S + Kg} \qquad (33)$$

Diese Ergebnisse reduzieren sich auf die Ergebnisse in Gleichung (24), wenn h = 0 ist.

Es wird darauf aufmerksam gemacht, daß die Numeratoren dieser Übertragungsfunktion in keiner Weise durch h beeinflußt sind. (Dies trifft allerdings nicht für sämtliche Übertragungsfunktionen zu.) Allerdings können die drei Parameter g, h und $B_A$ verwendet werden, um drei der vier Denominatorkoeffizienten beliebige Werte zu geben. Dies bedeutet, daß willkürliche Pole für den Regelfall durch ein solches Rückführschema erzielt werden können oder daß das System im Sinne der Regelungstheorie "kontrollierbar" ist.

Das einzige S in den Numeratoren der Gleichung (33) bedeutet, daß die statische Ablenkung für eingeschwungene Lasten verschwindet. Der Term $BS^2$ in Gleichung (32) bedeutet, daß die hochfrequente Isolation lediglich durch das Ausmaß der passiven Dämpfung bestimmt ist. Verwendet man wiederum die Gleichungen (6) bis (8) und die Gleichung (25), dann ergeben sich nichtdimensionale Versionen dieser Übertragungsfunktionen. (Der Parameter h ist ebenfalls schon nichtdimensional.)

$$\frac{\dot{V}}{V_o} = \frac{2\zeta s^2 + s + g}{s^3 + 2(\zeta + \zeta_a)s^2 + (1+h)s + g'} \qquad (34)$$

$$\frac{X}{F_o} = \frac{-s/K}{s^3 + 2(\zeta + \zeta_a)s^2 + (1+h)s + g'} \qquad (35)$$

Diese Ergebnisse lassen sich mit den Termen in Gleichung (36) vergleichen. Die Regelparameter sind g' und h sowie das aktive Dämpfungsverhältnis $\zeta_a$.

Die Synthese der optimalen Federung

Zur Lösung eines typischen Optimierungsproblems bei Regelungen gehört die Minimierung einer Funktion mit formalen Kriterien (üblicherweise einer quadratischen Funktion). Im linearen Fall ergibt sich dann, daß die kontrollierbare(n) Eingangsgröße oder Eingangsgrößen sich als Summe der Verstärkungen, multipliziert mit den Statusvariablen des Systems ergeben. Die weiter oben besprochene Federung paßt in allgemeiner Weise in dieses Muster. Die Eingangsgröße der Niveauregulierung beeinflußt die Statusvariablen X und V (oder P), wobei der aktive Dämpfer einen auch zu V proportionalen Krafteingang bildet. Da der Krafteingang an einem unterschiedlichen Punkt bei dem ungeregelten System auftritt, verglichen mit der Geschwindigkeitseingangsgröße der Niveauregulierung, ist das System steuerungsfähig, selbst dann, wenn in der Steuerung oder Regelung lediglich zwei der drei Statusvariablen inbegriffen sind. Dieses besondere Schema ermöglicht eine integrale Regelwirkung, was im allgemeinen nicht der Fall ist, wenn eine Rückführung mit Statusvariablen auf einen einzigen Steuereingang erfolgt. Die Wirkung der Niveauregulierung würde beispielsweise zerstört werden, wenn Q bei der Bestimmung von $V_A$ oder $V_B$ einbezogen würde.

Es sind schon eine Vielzahl von Untersuchungen durchgeführt worden, um bei Kraftfahrzeugfederungen optimale Regeltechniken einzuführen. Aus diesen Untersuchungen ergibt sich die Konzeption einer aktiven Dämpferwirkung, wobei sich in vielen Fällen herausgestellt hat, daß ein Dämpfungsverhältnis von $\sqrt{2}/2$ sich als optimal für oszillierende Wurzeln herausgestellt hat. Allerdings muß hier die eine statische Auslenkung beseitigende Integralwirkung einbezogen sein. Diese Integralwirkung ist bei den bisher besprochenen Federungskonzepten nicht nur deshalb notwendig, um Lastvariationen Rechnungen zu tragen, sondern auch, um zur Kontrolle von steifen Aufbauschwingungen und Bewegungen beizutragen, wie beispielsweise Querneigungsund Rollbewegungen, die auf Brems-, Beschleunigungs-und Wendemanöver zurückzuführen sind.

Die hier getroffene Lösung beruht darauf, daß auf den vorherigen Überlegungen basierende Stellen für die Pole für den Regelfall ausgewählt werden und dann Werte von $\zeta_a$, g' und h gefunden werden, die diese Pole tragen. Das sich hierdurch ergebende System kann dann in einem formalen Sinn mehr oder weniger ideal sein; jedenfalls ergibt sich mindestens dann ein sinnvolles Federungskonzept, wenn die Polorte sinnvoll ausgewählt worden sind.

Weiter vorn ist schon dargelegt worden, daß sich ein optimales System dann ergibt, wenn die Realwerte aller drei Pole gleich sind. Es hat sich auch feststellen lassen, daß die Frequenz der oszillierenden Pole (oscillatory poles) sich für moderate Werte von $B_A$ und g (oder $\zeta_a$ und g') nicht sehr stark ändert. Grundsätzlich ist es besser, die natürliche Frequenz der Federung einzustellen, indem man die passive Federkonstante K entsprechend justiert, als daß man ein Regelsystem verwendet. Unter diesen Umständen wird als Beispiel der folgende Denominator für die Übertragungsfunktionen im Regelfall gewählt:

$$(s^2 + 2\zeta_d s + 1)(s + \zeta_d) = s^3 + 3\zeta_d s^2 + (1 + 2\zeta_d^2)s + \zeta_d. \qquad (36)$$

In der Gleichung (36) kann $\zeta_d$ als ein ideales Dämpfungsverhältnis für die oszillierenden Pole im Regelfall angesehen werden. Die realen Anteile aller drei Pole liegen bei $s = -\zeta_d$, und die ungedämpfte natürliche Frequenz bleibt bei Eins. (Im nichtnormierten Fall:

$$\omega_n = (K/M)^{1/2}).$$

Werden die Koeffizienten in Gleichung (36) mit denen im Denominator des Polynoms - Gleichungen (34) oder (35) - verglichen, dann ergeben sich eine Reihe von Beziehungen.

$$g' = \zeta_d, \qquad (37)$$
$$1 + h = 1 + 2\zeta_d^2 , \qquad (38)$$
$$2(\zeta + \zeta_a) = 3\zeta_d. \qquad (39)$$

Das passive Dämpfungsverhältnis muß unabhängig ausgewählt werden. Es sollte für eine gute Isolierung, also Trennung der Bewegungen zwischen Fahrzeugaufbau und Rad zu kleinen Werten gewählt werden, jedoch nicht so klein, daß die vernachlässigten dynamischen Einflüsse von Rad und Bereifung nur eine geringe Dämpfung haben.

Wird $\zeta_d = 1/2$ gewählt, was zu einer schnelleren Reaktion und zu einer besseren Dämpfung des Systems verglichen mit denen in früheren Beispielen erreichbaren Möglichkeiten führt, und verwendet man $\zeta = 1/4$, dann ergibt sich aus den Gleichungen (37-39), daß $\zeta_a = g' = h = 1/2$ ist. Die Fig. 7 zeigt für dieses System den sich ergebenden Frequenzverlauf.

Man erkennt aus diesem Frequenzverlauf, daß die Federung ein nahezu idealer Filter ist. Komponenten von Straßenunebenheiten, deren Frequenzen niedriger als die natürliche Frequenz liegen, werden von der Aufbaumasse getreulich gefolgt. Höhere Frequenzkomponenten werden sorgsam ausgefiltert, wobei eine Resonanzüberhöhung überhaupt nicht auftritt.

Die Wirkung der Niveauregulierung ergibt sich mit einer Zeitkonstante von $1/\zeta_d = 2$ in nichtdimensionaler Zeit oder in Realzeit zu $2/\omega_n$. Für eine 1 Hz-Federung liegt die Zeitkonstante bei $1/\pi$ s. Dies ist beträchtlich schneller als dies bei den weiter vorn geschilderten Systemen möglich ist.

Ein interessantes Merkmal bei dieser Konzeption liegt darin, daß dann, wenn die Niveauregulierung abgeschaltet wird ($g' = h = 0$), die Federung zu einer aktiv gedämpften Federung zurückkehrt mit einem Dämpfungsverhältnis von 3/4 im Denominator und 1/4 im Numerator. Dies stellt eine nahezu optimal aktiv gedämpfte Federung dar. Selbst dann, wenn die aktive Dämpfung ebenfalls entfernt wird ($\zeta_a = 0$), verwandelt sich die Federung lediglich in eine konventionelle passive Federung mit einem im wesentlichen typischen Dämpfungsverhältnis von $\zeta = 1/4$. Es erscheint daher sinnvoll, die Niveauregulierung zur Einsparung von Energie dann abzuschalten, wenn diese nicht tatsächlich notwendig ist und auch alle aktiven Elemente im Falle eines Schadens an dem oder den Sensoren sowie am Regler abzuschalten.

Eine aktive Federung auf der Basis einer schnellen Niveauregulierung mit einem aktiven oder semiaktiven Dämpfer und einer Rückführgröße aus der Aufbaugeschwindigkeit des Fahrzeugs ist daher gegenüber bekannten Systemen von großem Vorteil, und zwar nicht nur bezüglich der vollständigen Flexibilität in der Einstellung der dynamischen Größen für den Regelfall, sondern auch deshalb, weil die Federung so ausgelegt werden kann, daß sie dann, wenn der oder die tatsächlich aktiven Teil(e) ausgeschaltet werden, zu sinnvoll aktiv gedämpften oder passiven Konfigurationen zurückkehrt bzw. diese einnimmt. Hierdurch lassen sich bei allen nichtkritischen Fahrbedingungen Energieeinsparungen erzielen, desgleichen ergibt sich auch eine überzeugende "Tail-safe"-Sicherheitskonzeption, die bei anderen Arten aktiver Federungen nicht möglich ist.

Im vorhergehenden ist aufgezeigt worden, daß eine auf schnell wirkenden Niveauregulierungen basierende aktive Fahrzeugfederung ein nahezu ideales Federverhalten zeigt, indem man die Steuerung der Niveauregulierung, die auf der realtiven Position zwischen Rad und Fahrzeugaufbau beruht, sowie die "absolute" Aufbaugeschwindigkeit im Zusammenhang mit gewissen passiven Dämpfungsmöglichkeiten für die Radkontrolle verwendet, sowie eine aktive Dämpfungskraft, die lediglich zur absoluten Aufbaugeschwindigkeit proportional ist.

Einbeziehung von Beschleunigungsgrößen

Ferner ergibt sich die Möglichkeit, daß eine Rückführung der Beschleunigungsgröße der isolierten Masse auf die Geschwindigkeitsquelle der Niveauregulierung aktive Dämpfungskräfte ergänzen oder sogar ersetzen kann. Semiaktive Dämpfer erfordern sehr wenig Leistung, diese Vorrichtungen können jedoch nicht genau die gewünschten aktiven Kraftkomponenten erzeugen. Es kann daher von Bedeutung sein, wenn man auch die Rückführung einer Beschleunigungsgröße zur Niveauregulierung in das Konzept der aktiven Dämpfung einbezieht, auch wenn sich hierdurch die Energieanforderungen, die die Niveauregulierung stellt, erhöhen.

Es ist möglich, die weiter vorn angegebenen Grundfunktionen in entsprechender Weise zu komplexeren Systemen auszulegen, indem man beispielsweise in den Gleichungen (29) bis (33) und entsprechend in

17

dem Blockschaltbild der Fig. 6 für den Term h die Größe (h + $k_a$S) einsetzt, um feststellen zu können, daß sich die Geschwindigkeiten $V_A$ und $V_B$ durch die zusätzliche Beschleunigungsverstärkung $k_a$ kontrollieren lassen. (Die Beschleunigung des Fahrzeugaufbaus ist S•V.)

Die Übertragungsfunktionen der Gleichungen (32) und (33) weisen dann modifizierte Denominatoren der folgenden Form auf

$$Ms^3 \ + \ (B + B_A + k_a K)s^2 \ + \ K(1 + h)s \ + \ Kg \qquad (40)$$

bei nichtveränderten Numeratoren. Wird daher die Größe $k_a$ eingeführt, dann kann $B_A$ reduziert oder sogar eliminiert werden. Obwohl die Analyse an idealisierten linearen Systemen durchgeführt worden ist, scheint kein Unterschied zu bestehen zwischen den Ergebnissen bei Zuordnung einer aktiven Dämpfung zu einer Niveauregulierung oder einer Beschleunigungs-Rückführgröße; allerdings sind viele Unterschiede in den Hardware-Ausführungen der beiden Fälle denkbar. Es ergibt sich dann die Notwendigkeit zur Erstellung eines Signals, welches auf jeden Fall die absolute Geschwindigkeit repräsentiert. Dieses Signal könnte zur Gewinnung eines Beschleunigungssignals angenähert differenziert werden, oder es ist auch möglich, unmittelbar einen Beschleunigungsgeber zu verwenden. Eine Möglichkeit zur Erzeugung eines V-Signals besteht darin, ein von einem Beschleunigungsmesser erzeugtes Signal zu integrieren.

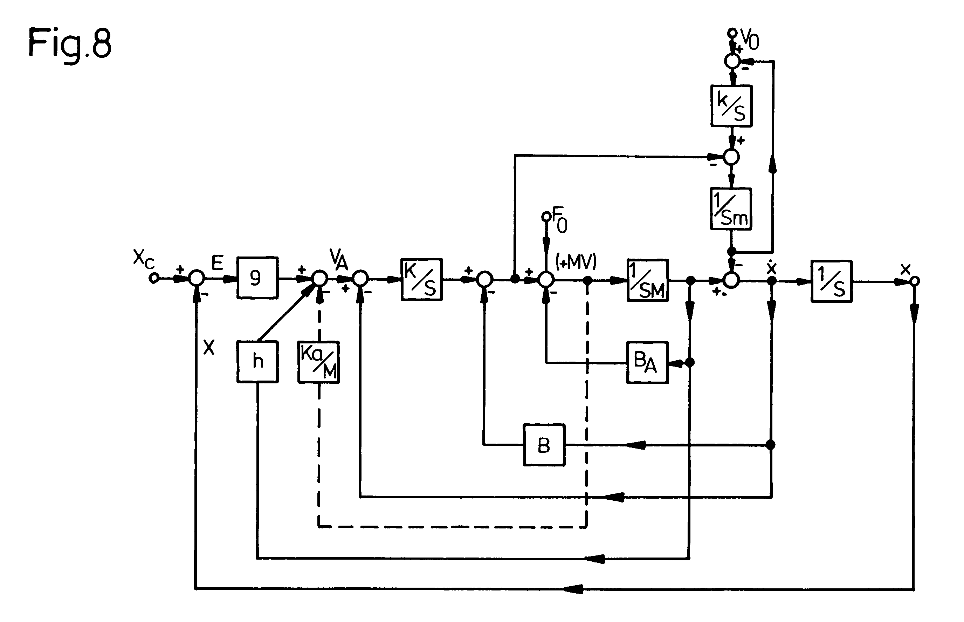

Andererseits ergibt sich dann, wenn variable Dämpfer verwendet werden sollen, eine gewisse Neigung, hier semiaktive Dämpfungsfähigkeiten einzusetzen, so daß das V-Signal mindestens angenähert dazu verwendet werden kann, die Kombination von aktiven und passiven Dämpfungskräften zu erzeugen. Hierdurch läßt sich eine nahezu optimale Dämpfung im System erzielen, ohne daß ein Energieverbrauch im Bereich der Niveauregulierung auftritt. Die Einbeziehung auch von Beschleunigungs-Rückführsignalen in das gesamte Regelschema ist jedenfalls eine vorteilhafte Ausgestaltung bei den hier vorgeschlagenen neuen Federungskonzepten mit aktiver Dämpfungskrafterzeugung und auf Niveauregulierung zurückzuführenden aktiven Federungen. Eine entsprechende Blockschaltbild-Funktionsdarstellung ist in Fig. 8 gezeigt.

Zusammenfassend läßt sich daher feststellen, daß die Kompensation statischer Regelabweichungen im Vergleich zu konventionellen Niveauregulierungssystemen, bei denen ausschließlich der relative Einfederweg zurückgeführt wird, wesentlich beschleunigt wird und auch nicht instabil wird. Dabei versteht es sich, daß die von den Istwertsensoren erfaßten und auf die FLLS-Komponente (Luftfeder) und den aktiven bzw. semiaktiven Dämpfer rückgeführten Signale in der beschriebenen Kombination und Weise erfolgt, da es die Zusammenfassung der beiden Stellglieder mit den entsprechenden Sensorsignalen ist, die die volle Regelbarkeit und damit ein stabiles Systemverhalten mit den genannten Vorteilen gewährleistet.

Bei der Erfindung ist ferner Zu beachten, daß, obwohl der relative Einfederweg nur proportional zurückgeführt wird, sich aufgrund der Beschaffenheit des gesamten Regelsystems mit den entsprechenden Stellerkomponenten ein integrales Reglerverhalten ergibt; dies bedeutet, daß die Rückführung der Vertikalgeschwindigkeit keinen Einfluß darauf hat, daß im eingeschwungenen Zustand die Regelabweichung in der Auslenkung gegen Null geht.

**Patentansprüche**

1. Vorrichtung zur aktiven Fahrwerksregelung bei Kraftfahrzeugen, mit einem Niveauregulierungssystem, welches ein erstes in Abhängigkeit zum relativen Einfederweg ($X_{rel}$) beaufschlagtes aktives Stellglied (K) umfaßt und bei dem ferner zwischen Radaufhängung und Aufbau zusätzliche passive Feder- und/oder Dämpferelemente angeordnet sind, dadurch gekennzeichnet, daß zusätzlich zu dem aktiven Stellglied (K) des Niveauregulierungssystems ein zweites aktives Stellglied in Form eines aktiven oder semiaktiven Dämpfers (Bsa) zwischen Radaufhängung (m) und Aufbau (M) vorgesehen ist, daß beide aktive Stellglieder (K, Bsa) in einem gemeinsamen Regelkreis (R") integriert sind und daß der gemeinsame Regelkreis (R") sowohl den relativen Einfederweg ($X_{rel}$) als auch die vertikale Absolutgeschwindigkeit ($V_{abs}$) des Aufbaus (M) zur Ansteuerung der beiden Stellglieder (K, Bsa) verwendet.

2. Vorrichtung nach Anspruch 1, dadurch gekennzeichnet, daß das Niveauregulierungssystem als schnelles, Belastungswechsel kompensierendes System (FLLS) ausgelegt ist und daß Belastungswechsel aus auf den Fahrzeugaufbau wirkende Ersatzkräfte (Fliehkraft), aus Fahrmanövern (Kurvenfahrt, Bremsen) oder Zuladung resultieren.

3. Vorrichtung nach Anspruch 1 oder 2, dadurch gekennzeichnet, daß die zusätzlichen passiven Feder- und Dämpferelemente zwischen Radaufhängung und Aufbau in den aktiven Stellgliedern integriert sind.

4. Vorrichtung nach einem der Ansprüche 1-3, dadurch gekennzeichnet, daß die zusätzlichen passiven Feder-und Dämpferelemente in Parallel- oder Serienschaltung zu den aktiven Stellgliedern angeordnet sind.

5. Vorrichtung nach einem der Ansprüche 1-4, dadurch gekennzeichnet, daß das Stellglied des FLLS-Niveauregulierungssystems hydraulisch, pneumatisch oder mechanisch betätigt ist.

6. Vorrichtung nach einem der Ansprüche 1-5, dadurch gekennzeichnet, daß zur Gewinnung der rückgeführten Vertikalgeschwindigkeit bzw. einer dieser Geschwindigkeit proportionalen Größe Beschleunigungssensoren (BS) oder Drehbeschleunigungssensoren vorgesehen sind, deren Ausgangssignal gleichzeitig dem semiaktiven oder aktiven, dissipativen Stellglied (Dämpfer) sowie in Kombination mit einer Rückführung des relativen Einfederweges ($x_{rel}$) dem FLLS-Stellglied zugeführt sind derart, daß sowohl statische Regelabweichungen kompensiert als auch das dynamische Systemverhalten bezüglich seiner Eigenwerte beliebig kontrollierbar ist.

7. Vorrichtung nach einem der Ansprüche 1-6, dadurch gekennzeichnet, daß die zwischen Radaufhängung und Aufbau vorhandenen zusätzlichen passiven Feder-und/oder Dämpferelemente so ausgelegt sind, daß für vorgegebene (nichtkritische) Fahrzustände die aktiven Komponenten abschaltbar sind derart, daß sich einerseits eine Leistungseinsparung, andererseits ein Fail-Safe-Betrieb erzielen läßt.

8. Vorrichtung nach einem der Ansprüche 1-7, dadurch gekennzeichnet, daß die rückgeführte absolute Vertikalgeschwindigkeit des Aufbaus der Hubgeschwindigkeit mit Bezug auf ein durchschnittliches Straßenbeschaffenheitsprofil entspricht, für welches die Absolutgeschwindigkeit gegenüber einem Inertialsystem im Mittel verschwindet.

9. Vorrichtung nach einem der Ansprüche 1-8, dadurch gekennzeichnet, daß die Eigenfrequenz des Aufbaus durch entsprechende Abstimmung der Federungskomponenten zunächst ohne Einfluß der Regelung auf niedrige Werte eingestellt ist und bei Bedarf durch die Regelung entsprechend variiert wird.

10. Vorrichtung nach einem der Ansprüche 1-9, dadurch gekennzeichnet, daß das passive Dämpfungsverhältnis bei niedrigen Werten so ausgewählt ist, daß sich einerseits eine gute Isolierung, also Trennung der Bewegung zwischen Fahrzeugaufbau und Rad und andererseits eine hinreichende Dämpfung dynamischer Rad- und Bereifungseinflüsse ergibt.

11. Vorrichtung nach einem der Ansprüche 1-10, dadurch gekennzeichnet, daß eine Tiefpaßfilterung der Einfederwege ($x_{rel}$) vorgesehen ist zur Erfassung speziell niederfrequenter Aufbaubewegungen für die FLLS-Niveauregulierung derart, daß in dieser Regelung hochfrequente Bewegungen (Radeigendynamik) nicht berücksichtigt sind.

12. Vorrichtung nach einem der Ansprüche 1-11, dadurch gekennzeichnet, daß für die Erstellung der vertikalen Absolutgeschwindigkeit ($V_{abs}$) des Aufbaus eine Bandpaßfilterung (BF) vorgesehen ist.

**Claims**

1. Arrangement for active closed-loop suspension control in motor vehicles having a ride-height control system, which includes a first active positioning element (K) acted on as a function of the relative suspension deflection ($X_{rel}$) and in which, furthermore, additional passive spring and/or damper elements are arranged between the wheel suspension and the superstructure, characterised in that in addition to the active positioning element (K) of the ride-height control system, a second active positioning element in the form of an active or semi-active damper ($B_{sa}$) is provided between the wheel suspension (m) and the superstructure (M), in that both active positioning elements (K, $B_{sa}$) are integrated in a common control circuit (R") and in that the common control circuit (R") uses both the relative suspension deflection ($X_{rel}$) and the vertical absolute velocity ($V_{abs}$) of the superstructure (M) for activating the two positioning elements (K, $B_{sa}$).

2. Arrangement according to Claim 1, characterised in that the ride-height control system is designed as a rapid load-change compensating system (fast load levelling system) and in that load changes result from equivalent forces (centrifugal force) acting on the vehicle superstructure due to driving manoeuvres (driving round a bend, braking) or loading.

3. Arrangement according to Claim 1 or 2, characterised in that the additional passive spring and damper elements are integrated in the active positioning elements between the wheel suspension and the superstructure.

4. Arrangement according to one of Claims 1-3, characterised in that the additional spring and damper elements are arranged in parallel or series with the active positioning elements.

5. Arrangement according to one of Claims 1-4, characterised in that the positioning element of the fast load levelling system is actuated hydraulically, pneumatically or mechanically.

6. Arrangement according to one of Claims 1-5, characterised in that in order to obtain the vertical velocity fed back or a parameter proportional to this velocity, acceleration sensors (BS) or angular acceleration sensors are provided whose output signal is simultaneously supplied to the semi-active or active dissipative positioning element (damper) and, in combination with a feedback of the relative suspension deflection ($X_{rel}$), to the fast load levelling system positioning element in such a way that compensation is provided for static control deviations and also that the dynamic system behaviour can be arbitrarily controlled with respect to its eigenvalues.

7. Arrangement according to one of Claims 1-6, characterised in that the additional passive spring and/or damper elements present between the wheel suspension and the superstructure are designed in such a way that in the case of specified (non-critical) driving conditions, the active components can be switched off in such a way that power saving can be achieved, on the one hand, and fail-safe operation can be achieved, on the other.

8. Arrangement according to one of Claims 1-7, characterised in that the absolute vertical velocity of the superstructure fed back corresponds to the stroke velocity with reference to an average road property profile for which the absolute velocity disappears on average relative to an inertial system.

9. Arrangement according to one of Claims 1-8, characterised in that the natural frequency of the superstructure is adjusted to low values by corresponding matching of the suspension components with no initial influence from the control system and is correspondingly varied, if required, by the control system.

10. Arrangement according to one of Claims 1-9, characterised in that the passive damping ratio at low values is selected in such a way that, on the one hand, there is good isolation, i.e. separation between the vehicle superstructure and wheel motions and, on the other hand, there is sufficient damping of dynamic wheel and tyre effects.

11. Arrangement according to one of Claims 1-10, characterised in that low-pass filtering of the suspension deflections ($X_{rel}$) is provided in order to deal specifically with low-frequency superstructure motions for the fast load levelling system in such a way that high-frequency motions (wheels' own dynamics) are not taken into account in this control system.

12. Arrangement according to one of Claims 1-11, characterised in that band pass filtering (BF) is provided for the establishment of the vertical absolute velocity ($V_{abs}$) of the superstructure.

**Revendications**

1. Dispositif de régulation active de la suspension de véhicules automobiles avec régulation de niveau qui comprend un premier organe de réglage (K) actif, sollicité en fonction de la course de suspension relative ($X_{rel}$) et selon lequel, en outre entre la suspension de roue et la carrosserie on a des éléments de suspension et/ou d'amortissement passifs supplémentaires, dispositif caractérisé en ce qu en plus de l'organe de réglage actif (K) du système de régulation de niveau, il est prévu un second organe de réglage actif sous la forme d'un amortisseur (Bsa) actif ou semi-actif entre la suspension de roue (m) et la carrosserie (M), en ce que les deux organes de réglage actifs (K, Bsa) sont intégrés dans un circuit de régulation commun (R") et que le circuit de régulation commun (R") utilise à la fois la course de suspension relative ($X_{rel}$) et la vitesse absolue verticale ($V_{abs}$) de la carrosserie (M) pour commander les deux organes de réglage (K, Bsa).

2. Dispositif selon la revendication 1, caractérisé en ce que le système de régulation de niveau est conçu comme système rapide à compensation par alternance de charge (FLLS) et en ce que l'alternance de charge résulte de force de remplacement (force centrifuge) agissant sur la carrosserie du véhicule et provenant des manoeuvres de conduite (déplacement en cours, freinage) ou d'adjonction de charge.

3. Dispositif selon la revendication 1 ou 2, caractérisé en ce que les éléments de suspension et d'amortissement passifs supplémentaires sont prévus entre la suspension de roue et la carrosserie dans les organes de réglage actifs.

4. Dispositif selon l'une des revendications 1 à 3, caractérisé en ce que les éléments de suspension et d'amortissement passifs supplémentaires sont prévus sous forme de montage en parallèle ou en série par rapport aux organes de réglage actifs.

5. Dispositif selon l'une des revendications 1 à 4, caractérisé en ce que l'organe de réglage du système de régulation de niveau est actionné mécaniquement, pneumatiquement ou hydrauliquement.

6. Dispositif selon l'une des revendications 1 à 5, caractérisé en ce que pour obtenir la vitesse verticale de réaction ou une grandeur proportionnelle à cette vitesse, il comporte des capteurs d'accélération (BS) ou des capteurs d'accélération de rotation dont le signal de sortie est appliqué en même temps à l'organe de réglage dissipatif (amortisseur), semi-actif ou actif, ainsi qu'en combinaison avec un retour en réaction du débattement de suspension ($X_{rel}$) relatif, à l'organe de réglage (FLLS), et en ce qu'à la fois, on compense les déviations de réglage, statiques, et on contrôle de manière quelconque le comportement dynamique du système quant à ses valeurs propres.

7. Dispositif selon l'une des revendications 1 à 6, caractérisé en ce que les éléments de suspension et/ou d'amortissement passifs supplémentaires prévus entre la suspension de roue et la carrosserie, sont conçus pour que les composants actifs prévus pour les états de roulement (non critiques) puissent être coupés de façon à obtenir d'une part, une économie de puissance et d'autre part, un fonctionnement en sécurité en cas de défaillance.

8. Dispositif selon l'une des revendications 1 à 7, caractérisé en ce que la vitesse verticale absolue de la carrosserie, fournie en réaction, correspond à la vitesse de soulèvement par rapport à un profil moyen de la caractéristique de la chaussée, et qui disparaît en moyenne pour la vitesse absolue par rapport à un système par inertie.

9. Dispositif selon l'une des revendications 1 à 8, caractérisé en ce que la fréquence propre de la carrosserie est réglée à des valeurs faibles par un accord correspondant des composants de la suspension, tout d'abord sans influence de la régulation, et en cas de besoin, elle peut être modifiée de façon correspondante par la régulation.

10. Dispositif selon l'une des revendications 1 à 9, caractérisé en ce que le rapport d'amortissement passif aux valeurs faibles est choisi de façon à obtenir d'une part une bonne isolation, c'est-à-dire une séparation du mouvement entre la carrosserie du véhicule et la roue et d'autre part, un amortissement suffisant des influences dynamiques de la roue et du pneumatique.

11. Dispositif selon l'une des revendications 1 à 10, caractérisé par un filtrage passe-bas du débattement de suspension ($X_{rel}$) pour saisir les mouvements de fréquence particulièrement basse de la carrosserie pour la régulation de niveau (FLLS) de façon que cette régulation ne prenne pas en compte des mouvements à haute fréquence (dynamique propre de la roue).

12. Dispositif selon l'une des revendications 1 à 11, caractérisé en ce que pour établir la vitesse absolue verticale ($V_{abs}$) de la carrosserie, il est prévu un filtrage passe-bande (BF).

# Fig.1

# Fig.2

EP 0 270 893 B1

Fig.4

Fig.3

# Fig.5

EP 0 270 893 B1

Fig.6

Fig.7

$[V/V_0]$

EP 0 270 893 B1

# Fig.8

EP 0 270 893 B1

# Fig.9

Fig.10

b = 0,5 , $b_a$ = 0 , 9' = 0
b = 0,5 , $b_a$ = 0 , 9' = 7727
b = 0,25 , $b_a$ = 0,25, 9' = 7/27

normierte
Frequenz ω

EP 0 270 893 B1